(19)

Europäisches Patentamt
European Patent Office
Office européen des brevets

(11) **EP 4 231 768 A1**

(12) **EUROPEAN PATENT APPLICATION**

(43) Date of publication:
**23.08.2023 Bulletin 2023/34**

(21) Application number: **23156689.4**

(22) Date of filing: **15.02.2023**

(51) International Patent Classification (IPC):
**H04W 76/19** *(2018.01)* **H04W 76/28** *(2018.01)*
**H04W 88/02** *(2009.01)* **H04W 88/08** *(2009.01)*

(52) Cooperative Patent Classification (CPC):
**H04W 76/19; H04W 76/28;** H04W 88/02;
H04W 88/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.02.2022 KR 20220021588**

(71) Applicant: **LG Electronics Inc.**
**Seoul 07336 (KR)**

(72) Inventors:
• **BACK, Seoyoung**
  **06772 SEOUL (KR)**
• **LEE, Seungmin**
  **06772 SEOUL (KR)**
• **PARK, Giwon**
  **06772 SEOUL (KR)**

(74) Representative: **Plasseraud IP**
**66, rue de la Chaussée d'Antin**
**75440 Paris Cedex 09 (FR)**

(54) **METHODS AND APPARATUS FOR OPERATING TX UE BASED ON RRC RELATED TIMER FOR SIDELINK DRX IN WIRELESS COMMUNICATION SYSTEM**

(57) In an embodiment of the present disclosure, there is provided a method of performing a radio resource control (RRC) related operation by a transmitter (TX) user equipment (UE) performing a sidelink (SL) discontinuous reception (DRX) operation in a wireless communication system. The method may include: receiving, by the TX UE, an SL DRX configuration from a base station; receiving, by the TX UE, a configured grant from the base station; performing, by the TX UE, SL transmission on a resource related to the configured grant during an active time based on the SL DRX configuration; performing, by the TX UE, an RRC connection related procedure to a network; and starting, by the TX UE, a timer for the RRC connection related procedure. The TX UE may perform transmission in an exceptional pool of the configured grant based on the SL DRX configuration after starting the timer. The SL DRX configuration may be maintained until expiration of the timer.

**FIG. 13**

EP 4 231 768 A1

## Description

**This application claims the benefit of** Korean Patent Application No. 10-2022-0021588, filed on February 18, 2022**, which is hereby incorporated by reference as if fully set forth herein.**

## BACKGROUND

The present disclosure relates to a wireless communication system, and more particular to, a method and apparatus for operating a transmitter (TX) user equipment (UE) based on an radio resource control (RRC) related timer in sidelink discontinuous reception (DRX).

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (LTEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

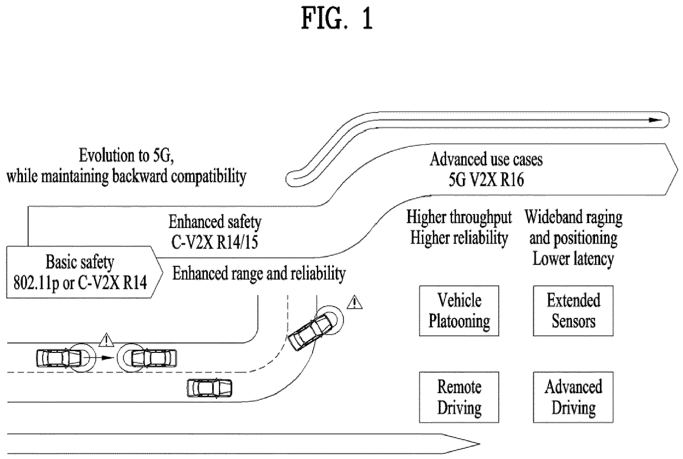

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the LTE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

## SUMMARY

Accordingly, the present disclosure is directed to a method and apparatus for operating a transmitter (TX) user equipment (UE) based on a radio resource control (RRC) related timer for sidelink discontinuous reception (DRX) in a wireless communication system that substantially obviate one or more problems due to limitations and disadvantages of the related art.

An object of the present disclosure is to provide operations related to a timer for an RRC related procedure of a TX LTE performing a sidelink (SL) DRX operation.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, there is provided a method of performing an RRC related operation by a TX UE performing a SL DRX operation in a wireless communication system. The method may include: receiving, by the TX UE, an SL DRX configuration from a base station; receiving, by the TX UE, a configured grant from the base station; performing, by the TX UE, SL transmission on a resource related to the configured grant during an active time based on the SL DRX configuration; performing, by the TX UE, an RRC connection related procedure to a network; and starting, by the TX UE, a timer for the RRC connection related procedure. The TX LTE may perform transmission in an exceptional pool of the configured grant based on the SL DRX configuration after starting the timer, and the SL DRX configuration may be maintained until expiration of the timer.

In another aspect of the present disclosure, there is provided a TX UE in a wireless communication system. The TX UE may include: at least one processor; and at least one computer memory operably connectable to the at least one processor and configured to store instructions that, when executed, cause the at least one processor to perform operations. The operations may include: receiving, by the TX UE, an SL DRX configuration from a base station; receiving, by the TX UE, a configured grant from the base station; performing, by the TX UE, SL transmission on a resource related to the configured grant during an active time based on the SL DRX configuration; performing, by the TX UE, an RRC connection related procedure to a network; and starting, by the TX UE, a timer for the RRC connection related procedure. The TX UE may perform transmission in an exceptional pool of the configured grant based on the SL DRX configuration after starting the timer, and the SL DRX configuration may be maintained until expiration of the timer.

In another aspect of the present disclosure, there is provided a processor configured to perform operations for a TX LTE in a wireless communication system. The operations may include: receiving, by the TX UE, an SL DRX configuration from a base station; receiving, by the TX UE, a configured grant from the base station; performing, by the TX UE, SL transmission on a resource related to the configured grant during an active time based on the SL DRX configuration; performing, by the TX UE, an RRC connection related procedure to a network; and starting, by the TX UE, a timer for the RRC connection related procedure. The TX UE may perform transmission in an exceptional pool of the configured grant based on the SL DRX configuration after starting the timer, and the SL DRX configuration may be maintained until expiration of the timer.

In another aspect of the present disclosure, there is provided a non-volatile computer-readable storage medium configured to store at least one computer program including instructions that, when executed by at least one processor, cause the at least one processor to perform operations for a TX UE. The operations may include: receiving, by the TX UE, an SL DRX configuration from a base station; receiving, by the TX UE, a configured grant from the base station; performing, by the TX UE, SL transmission on a resource related to the configured grant during an active time based on the SL DRX configuration; performing, by the TX UE, an RRC connection related procedure to a network; and starting, by the TX UE, a timer for the RRC connection related procedure. The TX LTE may perform transmission in an exceptional pool of the configured grant based on the SL DRX configuration after starting the timer, and the SL DRX configuration may be maintained until expiration of the timer.

In a further aspect of the present disclosure, there is provided a method of operating a base station in relation to RRC of a TX UE performing a SL DRX operation in a wireless communication system. The method may include: transmitting, by the base station, an SL DRX configuration to the TX UE; transmitting, by the base station, a configured grant to the TX UE; and performing, by the base station, an RRC connection related procedure with the TX UE. The TX UE may perform SL transmission on a resource related to the configured grant during an active time based on the SL DRX configuration. The TX UE may be configured to start a timer for the RRC connection related procedure. The TX UE may perform transmission in an exceptional pool of the configured grant based on the SL DRX configuration after starting the timer. The SL DRX configuration may be maintained until expiration of the timer.

The TX UE may randomly select a resource from the exceptional pool based on the active time.

The RRC connection related procedure may be one of an RRC connection re-establishment procedure and an RRC reconfiguration procedure.

The TX UE may reconfigure the SL DRX configuration based on the expiration of the timer.

The timer may expire in the following cases: when a new suitable cell is discovered, when radio link failure (RLF) is confirmed, or when random access is successful.

The TX UE may use the resource related to the configured grant despite a change of a transmission mode.

A transmission mode may change from transmission mode 1 to transmission mode 2, and the TX LTE may randomly select a resource from the exceptional pool based on transmission mode 2.

The timer may be one of timer T310, timer T311, and timer T304.

The configured grant may be configured grant type 1.

The TX UE may be configured to communicate with at least one of another UE, a UE related to an autonomous vehicle, the base station, or the network.

It is to be understood that both the foregoing general description and the following detailed description of the present disclosure are exemplary and explanatory and are intended to provide further explanation of the disclosure as claimed.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram for explaining comparison between vehicle-to-everything (V2X) communication based on pre-new radio (NR) radio access technology (RAT) and V2X communication based on NR;

FIG. 2 illustrates the structure of a Long Term Evolution (LTE) system according to an embodiment of the present disclosure;

FIG. 3 illustrates radio protocol architectures for user and control planes according to an embodiment of the present disclosure;

FIG. 4 illustrates the structure of a new radio (NR) system according to an embodiment of the present disclosure;

FIG. 5 illustrates a functional division between a next generation radio access network (NG-RAN) and a fifth-generation core (5GC) according to an embodiment of the present disclosure;

FIG. 6 illustrates the structure of a radio frame of NR to which embodiment(s) are applicable;

FIG. 7 illustrates the structure of a slot in an NR frame according to an embodiment of the present disclosure;

FIG. 8 illustrates a radio protocol architecture for sidelink (SL) communication according to an embodiment of the present disclosure;

FIG. 9 illustrates a radio protocol architecture for SL communication according to an embodiment of the present disclosure;

FIG. 10 illustrates a synchronization source or synchronization reference of V2X according to an embodiment of the present disclosure;

FIG. 11 illustrates a procedure for a user equipment (UE) to perform V2X or SL communication depending on transmission modes according to an embodiment of the present disclosure.;

FIG. 12 illustrates a UE and a peer UE;

FIG. 13 is a diagram for explaining an embodiment; and

FIGS. 14 to 20 are diagrams for explaining various devices to which embodiment(s) are applicable.

## DETAILED DESCRIPTION

Reference will now be made in detail to the preferred embodiments of the present disclosure, examples of which are illustrated in the accompanying drawings. Wherever possible, the same reference numbers will be used throughout the drawings to refer to the same or like parts.

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1 GHz, an intermediate frequency band between 1 GHz and 10 GHz, and a high frequency (millimeter) band of 24 GHz or above.

While the following description is given mainly in the context of LTE-A or 5G NR for the clarity of description, the technical idea of an embodiment of the present disclosure is not limited thereto.

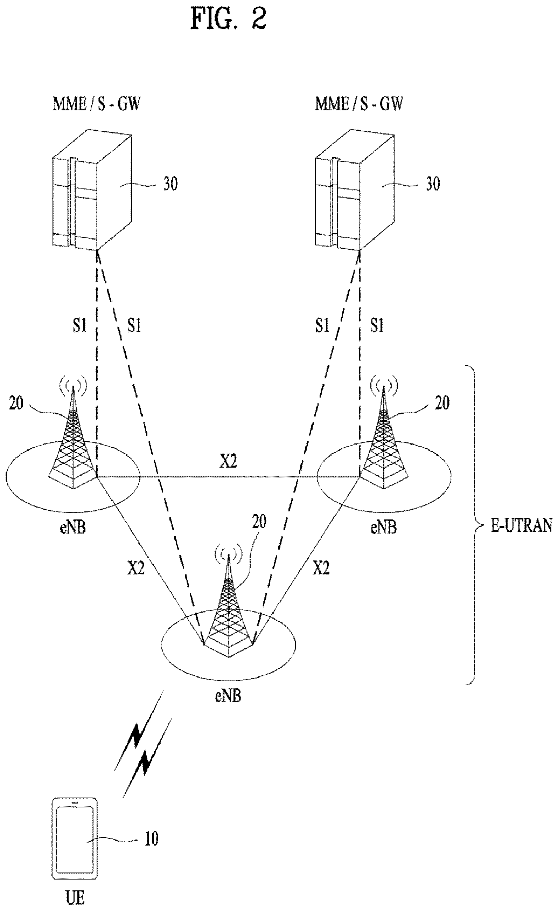

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

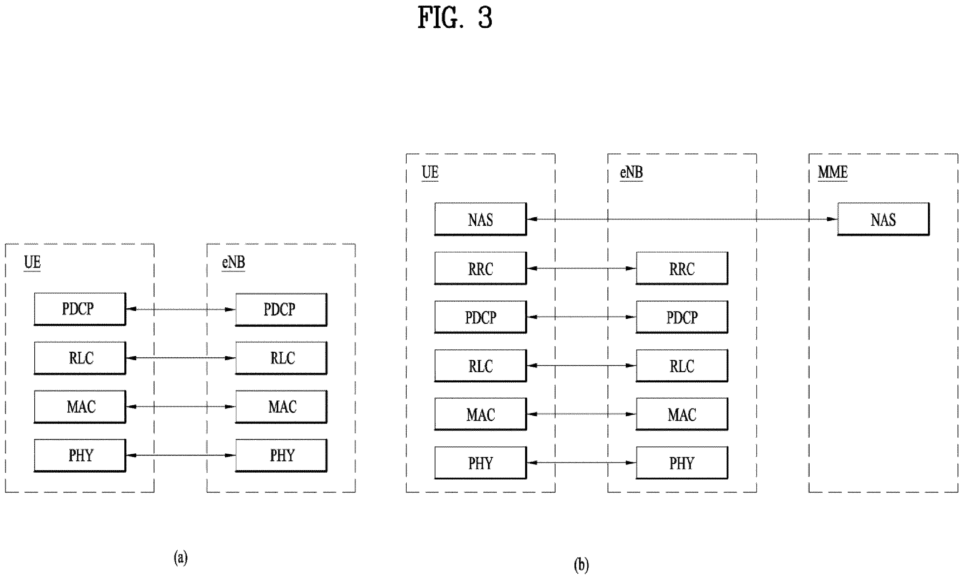

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the LTE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the LTE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

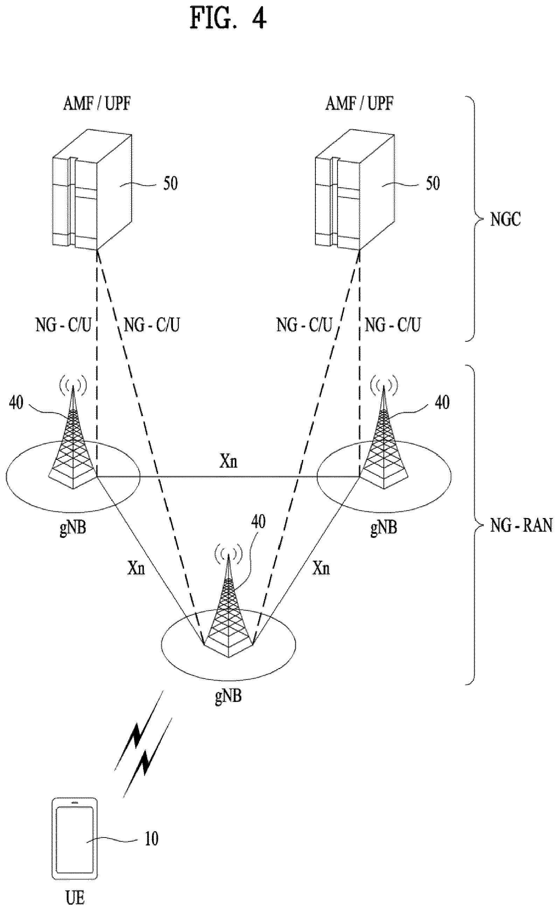

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a LTE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

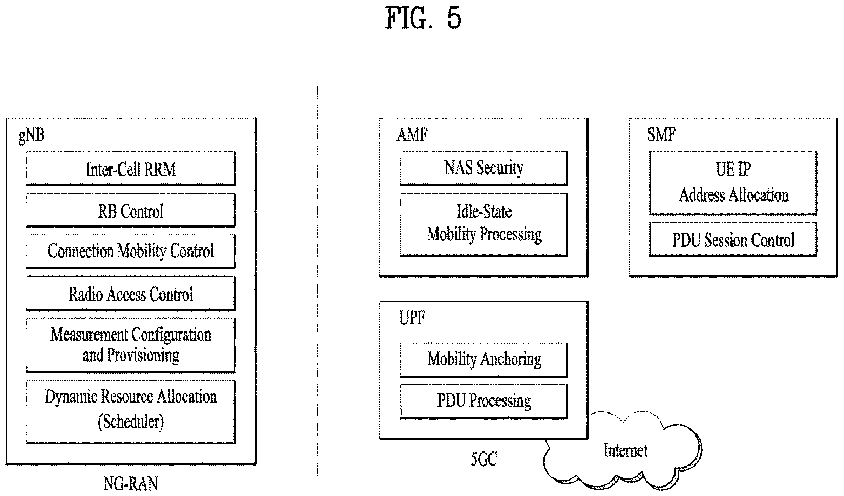

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including LTE Internet protocol (IP) address allocation and PDU session control.

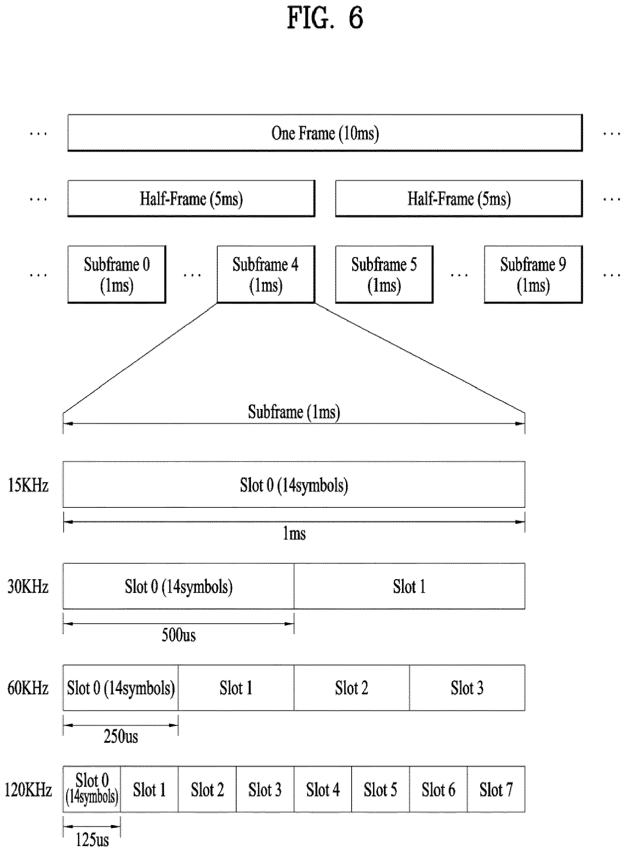

FIG. 6 illustrates a radio frame structure in NR, to which embodiment(s) of the present disclosure is applicable.

Referring to FIG. 6, a radio frame may be used for LTL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot Nslotsymb, the number of slots per frame Nframe,uslot, and the number of slots per subframe Nsubframe,uslot according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15 kHz, a wide area in traditional cellular bands may be supported, while with an SCS of 30/60 kHz, a dense urban area, a lower latency, and a wide carrier bandwidth may be supported. With an SCS of 60 kHz or higher, a bandwidth larger than 24.25 GHz may be supported to overcome phase noise.

An NR frequency band may be defined by two types of frequency ranges, FR1 and FR2. The numerals in each frequency range may be changed. For example, the two types of frequency ranges may be given in [Table 3]. In the NR system, FR1 may be a "sub 6 GHz range" and FR2 may be an "above 6 GHz range" called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerals in a frequency range may be changed in the NR system. For example, FR1 may range from 410 MHz to 7125 MHz as listed in [Table 4]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, for example, vehicle communication (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

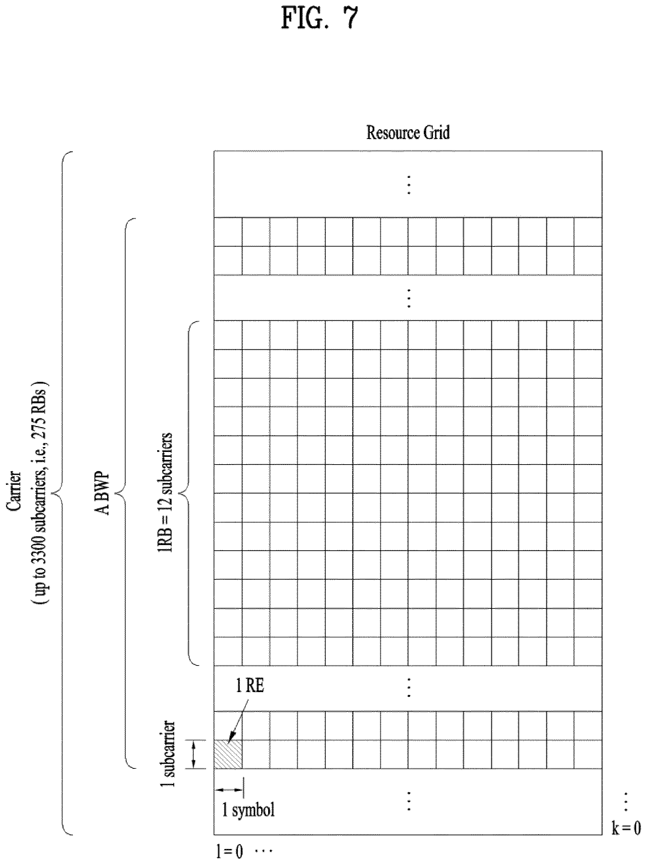

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between LTEs or a radio interface between a LTE and a network may include L1, L2, and L3. In various embodiments of the present disclosure, L1 may refer to the PHY layer. For example, L2 may refer to at least one of the MAC layer, the RLC layer, the PDCH layer, or the SDAP layer. For example, L3 may refer to the RRC layer.

Now, a description will be given of sidelink (SL) communication.

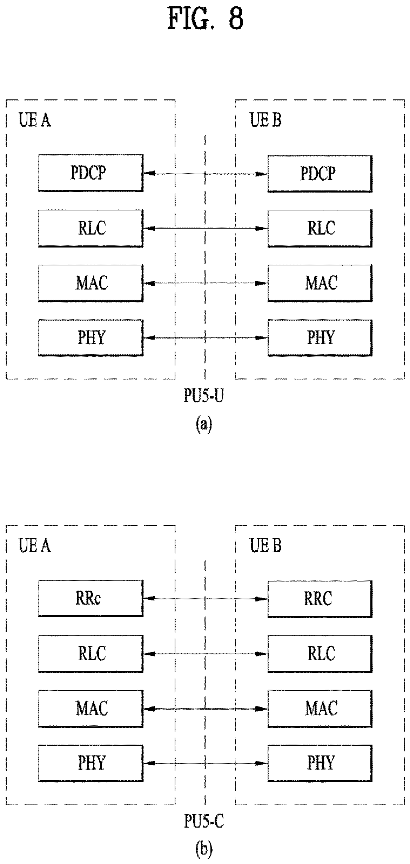

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

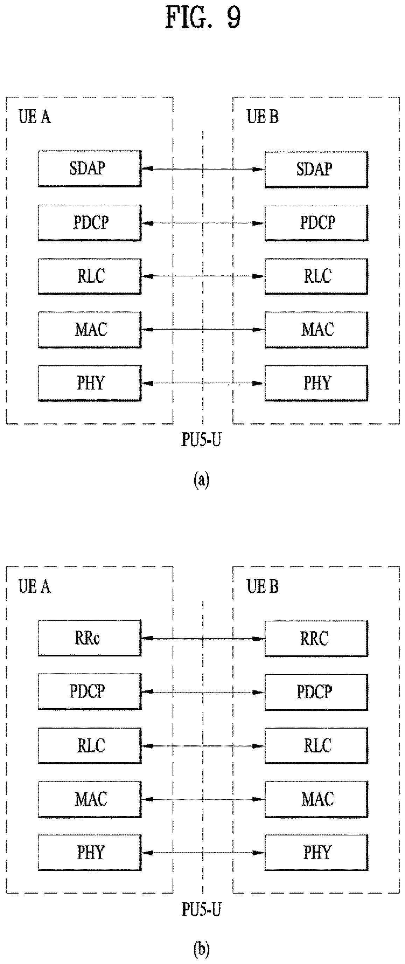

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

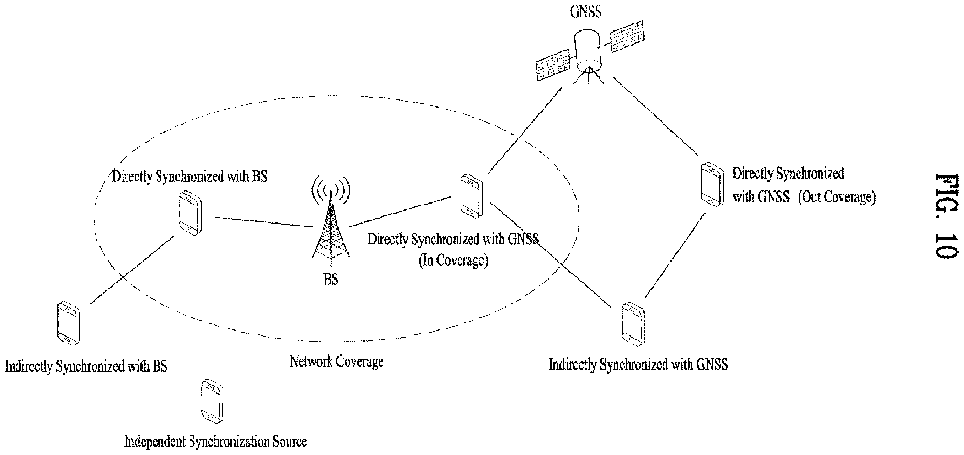

FIG. 10 illustrates a synchronization source or synchronization reference of V2X according to an embodiment of the present disclosure.

Referring to FIG. 10, in V2X, a LTE may be directly synchronized with global navigation satellite systems (GNSS). Alternatively, the UE may be indirectly synchronized with the GNSS through another UE (within or out of network coverage). If the GNSS is configured as a synchronization source, the UE may calculate a direct frame number (DFN) and a subframe number based on a coordinated universal time (UTC) and a configured (or preconfigured) DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the LTE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the LTE fails to detect any cell in the carrier used for V2X/SL communication and fails to receive the synchronization configuration from the serving cell, the LTE may conform to a preset synchronization configuration.

Alternatively, the UE may be synchronized with another LTE that has failed to directly or indirectly acquire the synchronization information from the BS or the GNSS. A synchronization source and a preference may be preconfigured for the UE. Alternatively, the synchronization source and the preference may be configured through a control message provided by the BS.

SL synchronization sources may be associated with synchronization priority levels. For example, a relationship between synchronization sources and synchronization priorities may be defined as shown in Table 5 or 6. Table 5 or 6 is merely an example, and the relationship between synchronization sources and synchronization priorities may be defined in various ways.

[Table 5]

| Priority level | GNSS-based synchronization | BS-based synchronization (eNB/gNB-based synchronization) |
|---|---|---|
| P0 | GNSS | BS |

(continued)

| Priority level | GNSS-based synchronization | BS-based synchronization (eNB/gNB-based synchronization) |
|---|---|---|
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 6]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with GNSS |
| P3 | BS | GNSS |
| P4 | All UEs directly synchronized with GNSS | All UEs directly synchronized with GNSS |
| P5 | All UEs indirectly synchronized with GNSS | All UEs indirectly synchronized with GNSS |
| P6 | Remaining LTE(s) with low priority | Remaining LTE(s) with low priority |

In Table 5 or 6, P0 may mean the highest priority, and P6 may mean the lowest priority. In Table 5 or 6, the BS may include at least one of a gNB or an eNB.

Whether to use GNSS-based synchronization or eNB/gNB-based synchronization may be (pre)configured. In a single-carrier operation, the LTE may derive a transmission timing thereof from an available synchronization reference having the highest priority.

Hereinafter, a sidelink synchronization signal (SLSS) and synchronization information will be described.

As an SL-specific sequence, the SLSS may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may use the S-PSS to detect an initial signal and obtain synchronization. In addition, the LTE may use the S-PSS and the S-SSS to obtain detailed synchronization and detect a synchronization signal ID.

A physical sidelink broadcast channel (PSBCH) may be a (broadcast) channel for transmitting default (system) information that the UE needs to know first before transmitting and receiving SL signals. For example, the default information may include information related to an SLSS, a duplex mode (DM), a time division duplex (TDD) LTL/DL configuration, information related to a resource pool, an application type related to the SLSS, a subframe offset, broadcast information, etc. For example, for evaluation of PSBCH performance in NR V2X, the payload size of the PSBCH may be 56 bits including a CRC of 24 bits.

The S-PSS, S-SSS, and PSBCH may be included in a block format (e.g., SL synchronization signal (SS)/PSBCH block) supporting periodical transmission (hereinafter, the SL SS/PSBCH block is referred to as a sidelink synchronization signal block (S-SSB)). The S-SSB may have the same numerology (i.e., SCS and CP length) as that of a physical sidelink control channel (PSCCH)/physical sidelink shared channel (PSSCH) on a carrier, and the transmission bandwidth may exist within a configured (or preconfigured) SL BWP. For example, the S-SSB may have a bandwidth of 11 RBs. For example, the PSBCH may span 11 RBs. In addition, the frequency position of the S-SSB may be configured (or pre-configured). Therefore, the LTE does not need to perform hypothesis detection on frequency to discover the S-SSB on the carrier.

The NR SL system may support a plurality of numerologies with different SCSs and/or different CP lengths. In this case, as the SCS increases, the length of a time resource used by a transmitting LTE to transmit the S-SSB may decrease. Accordingly, the coverage of the S-SSB may be reduced. Therefore, in order to guarantee the coverage of the S-SSB, the transmitting UE may transmit one or more S-SSBs to a receiving UE within one S-SSB transmission period based on the SCS. For example, the number of S-SSBs that the transmitting UE transmits to the receiving UE within one S-SSB transmission period may be pre-configured or configured for the transmitting UE. For example, the S-SSB transmission period may be 160 ms. For example, an S-SSB transmission period of 160 ms may be supported for all SCSs.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

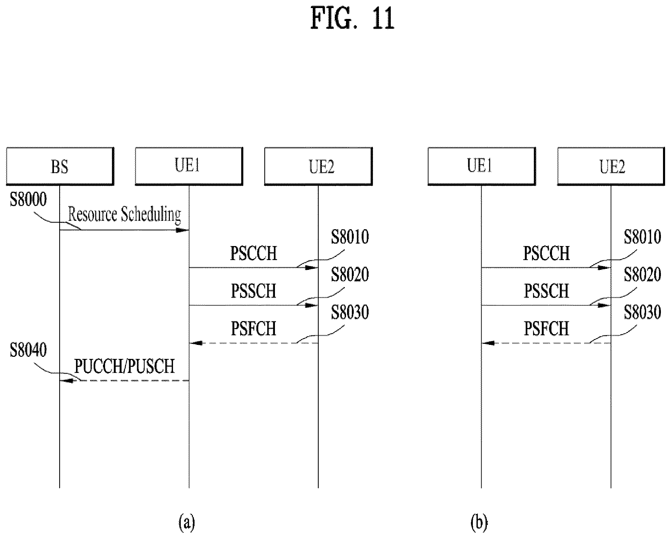

FIG. 11 illustrates a procedure of performing V2X or SL communication by a UE depending on a transmission mode according to an embodiemnt of the present disclosure. The embodiemnt of FIG. 11 may be combined with various embodiemnts of the present disclosure. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 11(a) illustrates a UE operation related to LTE transmission mode 1 or LTE transmission mode 3. Alternatively, for example, FIG. 11(a) illustrates a UE operation related to NR resource allocation mode 1. For example, LTE transmission mode 1 may apply to general SL communication, and LTE transmission mode 3 may apply to V2X communication.

For example, FIG. 11(b) illustrates a UE operation related to LTE transmission mode 2 or LTE transmission mode 4. Alternatively, for example, FIG. 11(b) illustrates a UE operation related to NR resource allocation mode 2.

Referring to FIG. 11 (a), in LTE transmission mode 1, LTE transmission mode 3, or NR resource allocation mode 1, a BS may schedule an SL resource to be used for SL transmission by a UE. For example, in step S8000, the BS may transmit information related to an SL resource and/or information related to a UE resource to a first UE. For exmaple, the UL resource may include a PUCCH resource and/or a PUSCH resource. For exmaple, the UL resource may be a resource to report SL HARQ feedback to the BS.

For example, the first LTE may receive information related to a Dynamic Grant (DG) resource and/or information related to a Configured Grant (CG) resource from the BS. For example, the CG resource may include a CG type 1 resource or a CG type 2 resource. In the present specification, the DG resource may be a resource configured/allocated by the BS to the first UE in Downlink Control Information (DCI). In the present specification, the CG resource may be a (periodic) resource configured/allocated by the BS to the first UE in DCI and/or an RRC message. For example, for the CG type 1 resource, the BS may transmit an RRC message including information related to the CG resource to the first UE. For example, for the CG type 2 resource, the BS may transmit an RRC message including information related to the CG resource to the first LTE, and the BS may transmit DCI for activation or release of the CG resource to the first UE.

In step S8010, the first LTE may transmit a PSCCH (e.g., Sidelink Control Information (SCI) or 1st-stage SCI) to a second UE based on the resource scheduling. In step S8020, the first UE may transmit a PSSCH (e.g., 2nd-stage SCI, MAC PDU, data, etc.) related to the PSCCH to the second UE. In step S8030, the first UE may receive a PSFCH related to the PSCCH/PSSCH from the second UE. For example, HARQ feedback information (e.g., NACK information or ACK information) may be received from the second UE over the PSFCH. In step S8040, the first UE may transmit/report HARQ feedback information to the BS over a PUCCH or PUSCH. For example, the HARQ feedback information reported to the BS may include information generated by the first LTE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1. Table 7 shows one example of DCI for scheduling of SL.

[Table 7]

| |
|---|
| 7.3.1.4.1 Format 3_0<br>DCI format 3_0 is used for scheduling of NR PSCCH and NR PSSCH in one cell. |

(continued)

7.3.1.4.1 Format 3_0

The following information is transmitted by means of the DCI format 3_0 with CRC scrambled by SL-RNTI or SL-CS-RNTI:

- Resource pool index $-\lceil \log_2 I \rceil$ bits, where *I* is the number of resource pools for transmission configured by the higher layer parameter *sl-TxPoolScheduling*.
- Time gap - 3 bits determined by higher layer parameter *sl-DCI-ToSL-Trans,* as defined in clause 8.1.2.1 of [6, TS 38.214]
- HARQ process number - 4 bits.
- New data indicator - 1 bit.

$-\lceil \log_2(N_{\text{subChannel}}^{\text{SL}}) \rceil$ - Lowest index of the subchannel allocation to the initial transmission bits as defined in clause 8.1.2.2 of [6, TS 38.214]
- SCI format 1-A fields according to clause 8.3.1.1:
- Frequency resource assignment.
- Time resource assignment.

- PSFCH-to-HARQ feedback timing indicator $-\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213]
- PUCCH resource indicator - 3 bits as defined in clause 16.5 of [5, TS 38.213].
- Configuration index - 0 bit if the UE is not configured to monitor DCI format 3_0 with CRC scrambled by SL-CS-RNTI, otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits
- 2 bits as defined in clause 1652 of [5, TS 38.213] if the UE is configured with *pdsch-HARQ-ACK-Codebook = dynamic*
- 2 bits as defined in clause 1651 of [5, TS 38.213] if the UE is configured with *pdsch-HARQ-ACK-Codebook = semi-static*
- Padding bits, if required

If multiple transmit resource pools are provided in *sl-TxPoolScheduling,* zeros shall be appended to the DCI format 3_0 until the payload size is equal to the size of a DCI format 3_0 given by a configuration of the transmit resource pool resulting in the largest number of information bits for DCI format 3_0.

If the UE is configured to monitor DCI format 3_1 and the number of information bits in DCI format 3_0 is less than the payload of DCI format 3_1, zeros shall be appended to DCI format 3_0 until the payload size equals that of DCI format 3_1.

**7.3.1.4.2 Format 3_1**

DCI format 3_1 is used for scheduling of LTE PSCCH and LTE PSSCH in one cell.

The following information is transmitted by means of the DCI format 3_1 with CRC scrambled by SL Semi-Persistent Scheduling V-RNTI:

- Timing offset- 3 bits determined by higher layer parameter *sl-TimeOffsetEUTRA,* as defined in clause 16.6 of [5, TS 38.213]
- Carrier indicator -3 bits as defined in 5.3.3.1.9A of [11, TS 36.212].

- $\lceil \log_2(N_{\text{subchannel}}^{\text{SL}}) \rceil$ - Lowest index of the subchannel allocation to the initial transmission bits as defined in 5 3.3.1.9A of [11, TS 36.212].
- Frequency resource location of initial transmission and retransmission, as defined in 5.3.3.1.9A of [11, TS 36.212]
- Time gap between initial transmission and retransmission, as defined in 5.3.3.1.9A of [11, TS 36.212]

(continued)

| If the UE is configured to monitor DCI format 3_1 and the number of information bits in DCI format 3_0 is less than the payload of DCI format 3_1, zeros shall be appended to DCI format 3_0 until the payload size equals that of DCI format 3_1. |
| --- |
| - SL index - 2 bits as defined in 5.3.3.1.9A of [11, TS 36.212] |
| - SL SPS configuration index - 3 bits as defined in clause 5.3.3.1.9A of [11, TS 36.212]. |
| - Activation/release indication - 1 bit as defined in clause 5.3.3.1.9A of [11, TS 36.212]. |

Referring to FIG. 11(b), in LTE transmission mode 2, LTE transmission mode 4, or NR resource allocation mode 2, a LTE may determine an SL transmission resource from among SL resources configured by a BS/network or preconfigured SL resources. For example, the configured SL resources or the preconfigured SL resources may be a resource pool. For example, the LTE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in step S8010, the first UE having self-selected a resource in the resource pool may transmit a PSCCH (e.g., Sidelink Control Information (SCI) or 1st-stage SCI) to the second UE using the resource. In the step S8020, the first UE may transmit a PSSCH (e.g., 2nd-stage SCI, MAC PDU, data, etc.) related to the PSCCH to the second UE. In step S8030, the first UE may receive PSFCH related to the PSCCH/PSSCH from the second LTE.

Referring to FIG. 1 1(a) or FIG. 1 1(b), for example, the first UE may transmit the SCI to the second LTE on the PSCCH. Alternatively, for example, the first LTE may transmit two consecutive SCIs (e.g., two-stage SCI) to the second LTE on the PSCCH and/or PSSCH. In this case, the second LTE may decode the two consecutive SCIs (e.g., two-stage SCI) to receive the PSSCH from the first LTE. In the present specification, SCI transmitted on a PSCCH may be referred to as 1st SCI, 1st-stage SCI, or 1st-stage SCI format, and SCI transmitted on a PSSCH may be referred to as 2nd SCI, 2nd SCI, 2nd-stage SCI format. For example, the 1st-stage SCI format may include SCI format 1-A, and the 2nd-stage SCI format may include SCI format 2-A and/or SCI format 2-B. Table 8 shows one example of a 1st-stage SCI format.

[Table 8]

| 8.3.1.1 SCI format 1-A |
| --- |
| SCI format 1-A is used for the scheduling of PSSCH and 2nd-stage-SCI on PSSCH |
| The following information is transmitted by means of the SCI format 1-A: |

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

$$-\left\lceil\log_2(\frac{N_{\text{subChannel}}^{\text{SL}}\left(N_{\text{subChannel}}^{\text{SL}}+1\right)}{2})\right\rceil\left\lceil\log_2(\frac{N_{\text{subChannel}}^{\text{SL}}\left(N_{\text{subChannel}}^{\text{SL}}+1\right)\left(2N_{\text{subChannel}}^{\text{SL}}+1\right)}{6})\right\rceil$$ - Frequency resource assignment bits when the value of the higher layer parameter *sl-MaxNumPerReserve* is configured to 2; otherwise bits when the value of the higher layer parameter *sl-MaxNumPerReserve* is configured to 3, as defined in clause 8.1.5 of [6, TS 38214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

- Resource reservation period $\left\lceil\log_2 N_{\text{rsv\_period}}\right\rceil$ bits as defined in clause 16.4 of [5, TS 38.213], where $N_{\text{rsv\_period}}$ is the number of entries in the higher layer parameter *sl-ResourceReservePeriodList,* if higher layer parameter *sl-MultiReserveResource* is configured; 0 bit otherwise.

- DMRS pattern $\left\lceil\log_2 N_{\text{pattern}}\right\rceil$ bits as defined in clause 8.4.1.1.2 of [4, TS 38.211], where $N_{\text{pattern}}$ is the number of DMRS patterns configured by higher layer parameter *sl-PSSCH-DMRS-TimePatternList.*
- 2nd-stage SCI format - 2 bits as defined in Table 8.3.1.1-1.

(continued)

| 8.3.1.1 SCI format 1-A |
|---|
| - Beta offset indicator - 2 bits as provided by higher layer parameter *sl-BetaOffsets2ndSCI* and Table 8.3.1.1-2.<br><br>- Number of DMRS port- 1 bit as defined in Table 8.3.1.1-3.<br><br>- Modulation and coding scheme - 5 bits as defined in clause 8.1.3 of [6, TS 38.214].<br><br>- Additional MCS table indicator - as defined in clause 8.1.3.1 of [6, TS 38.214]: 1 bit if one MCS table is configured by higher layer parameter *sl-Additional-MCS-Table*; 2 bits if two MCS tables are configured by higher layer parameter *sl- Additional-MCS-Table*; 0 bit otherwise.<br><br>- PSFCH overhead indication - 1 bit as defined clause 8.1.3.2 of [6, TS 38.214] if higher layer parameter *sl-PSFCH-Period* = 2 or 4; 0 bit otherwise.<br><br>- Reserved - a number of bits as determined by higher layer parameter *sl-NumReservedBits,* with value set to zero. |

Table 9 shows exemplary 2nd-stage SCI formats.

[Table 9]

| 8.4 Sidelink control information on PSSCH<br>SCI carried on PSSCH is a 2nd-stage SCI, which transports sidelink scheduling information. |
|---|
| 8.4.1 2nd-stage SCI formats<br>The fields defined in each of the 2nd-stage SCI formats below are mapped to the information bits $a_0$ to $a_{A-1}$ as follows: Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$. |
| 8.4.1.1 SCI format 2-A<br>SCI format 2-A is used for the decoding of PSSCH, with HARQ operation when HARQ-ACK information includes ACK or NACK, when HARQ-ACK information includes only NACK, or when there is no feedback of HARQ-ACK information.<br>The following information is transmitted by means of the SCI format 2-A:<br><br>  - HARQ process number - 4 bits.<br>  - New data indicator - 1 bit.<br>  - Redundancy version - 2 bits as defined in Table 7.3.1.1.1-2.<br>  - Source ID - 8 bits as defined in clause 8.1 of [6, TS 38.214].<br>  - Destination ID - 16 bits as defined in clause 8.1 of [6, TS 38.214].<br>  - HARQ feedback enabled/disabled indicator - 1 bit as defined in clause 16.3 of [5, TS 38.213].<br>  - Cast type indicator - 2 bits as defined in Table 8.4.1.1-1 and in clause 8.1 of [6, TS 38.214].<br>  - CSI request - 1 bit as defined in clause 8.2.1 of [6. TS 38.214] and in clause 8.1 of [6, TS 38.214]. |

Referring to FIG. 11(a) or FIG. 11(b), in step S8030, a first UE may receive a PSFCH based on Table 10. For example, the first UE and a second UE may determine a PSFCH resource based on Table 10, and the second UE may transmit HARQ feedback to the first UE on the PSFCH resource.

[Table 10]

## 16.3 UE procedure for reporting HARQ-ACK on sidelink

A UE can be indicated by an SCI format scheduling a PSSCH reception to transmit a PSFCH with HARQ-ACK information in response to the PSSCH reception. The UE provides HARQ-ACK information that includes ACK or NACK, or only NACK.

A UE can be provided, by *sl-PSFCH-Period*, a number of slots in a resource pool for a period of PSFCH transmission occasion resources. If the number is zero, PSFCH transmissions from the UE in the resource pool are disabled.

A UE expects that a slot $t'^{SL}_k$ $(0 \le k < T'_{m\,\omega})$ has a PSFCH transmission occasion resource if $k \bmod N^{PSFCH}_{PSSCH} = 0$, where $t'^{SL}_k$ is defined in [6, TS 38.214], and $T'_{m\,\omega}$ is a number of slots that belong to the resource pool within 10240 msec according to [6, TS 38.214], and $N^{PSFCH}_{PSSCH}$ is provided by *sl-PSFCH-Period*.

A UE may be indicated by higher layers to not transmit a PSFCH in response to a PSSCH reception [11, TS 38.321].

If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH*, of the resource pool after a last slot of the PSSCH reception.

A UE is provided by *sl-PSFCH-RB-Set* a set of $M^{PSFCH}_{PRB,set}$ PRBs in a resource pool for PSFCH transmission in a PRB of the resource pool. For a number of $N_{subch}$ sub-channels for the resource pool, provided by *sl-NumSubchannel*, and a number of PSSCH slots associated with a PSFCH slot that is less than or equal to $N^{PSFCH}_{PSSCH}$, the UE allocates the $\left[\left(i + j \cdot N^{PSFCH}_{PSSCH}\right) \cdot M^{PSFCH}_{subch,slot}, \left(i + 1 + j \cdot N^{PSFCH}_{PSSCH}\right) \cdot M^{PSFCH}_{subch,slot} - 1\right]$ PRBs from the $M^{PSFCH}_{PRB,set}$ PRBs to slot $i$ among the PSSCH slots associated with the PSFCH slot and sub-channel $j$, where $M^{PSFCH}_{subch,slot} = M^{PSFCH}_{PRB,set}/\left(N_{subch} \cdot N^{PSFCH}_{PSSCH}\right)$, $0 \le i < N^{PSFCH}_{PSSCH}$, $0 \le j < N_{subch}$, and the allocation starts in an ascending order of $i$ and continues in an ascending order of $j$. The UE expects that $M^{PSFCH}_{PRB,set}$ is a multiple of $N_{subch} \cdot N^{PSFCH}_{PSSCH}$.

The second OFDM symbol $l'$ of PSFCH transmission in a slot is defined as
$l' = sl\text{-}StartSymbol + sl\text{-}LengthSymbols - 2$.

A UE determines a number of PSFCH resources available for multiplexing HARQ-ACK information in a PSFCH transmission as $R^{PSFCH}_{PRB,CS} = N^{PSFCH}_{type} \cdot M^{PSFCH}_{subch,slot} \cdot N^{PSFCH}_{CS}$ where $N^{PSFCH}_{CS}$ is a number of cyclic shift pairs for the resource pool provided by *sl-NumMuxCS-Pair* and, based on an indication by *sl-PSFCH-CandidateResourceType*,

- if *sl-PSFCH-CandidateResourceType* is configured as *startSubCH*, $N^{PSFCH}_{type} = 1$ and the $M^{PSFCH}_{subch,slot}$ PRBs are associated with the starting sub-channel of the corresponding PSSCH;

- if *sl-PSFCH-CandidateResourceType* is configured as *allocSubCH*, $N^{PSFCH}_{type} = N^{PSSCH}_{subch}$ and the $N^{PSSCH}_{subch} \cdot M^{PSFCH}_{subch,slot}$ PRBs are associated with the $N^{PSSCH}_{subch}$ sub-channels of the corresponding PSSCH.

The PSFCH resources are first indexed according to an ascending order of the PRB index, from the $N^{PSFCH}_{type} \cdot M^{PSFCH}_{subch,slot}$ PRBs, and then according to an ascending order of the cyclic shift pair index from the $N^{PSFCH}_{CS}$ cyclic shift pairs.

A UE determines an index of a PSFCH resource for a PSFCH transmission in response to a PSSCH reception as $(P_{ID} + M_{ID}) \bmod R^{PSFCH}_{PRB,CS}$ where $P_{ID}$ is a physical layer source ID provided by SCI format 2-A or 2-B [5, TS 38.212] scheduling the PSSCH reception, and $M_{ID}$ is the identity of the UE receiving the PSSCH as indicated by higher layers if the UE detects a SCI format 2-A with Cast type indicator field value of "01"; otherwise, $M_{ID}$ is zero.

A UE determines a $m_0$ value, for computing a value of cyclic shift $\alpha$ [4, TS 38.211], from a cyclic shift pair index corresponding to a PSFCH resource index and from $N^{PSFCH}_{CS}$ using Table 16.3-1.

Referring to FIG. 11(a), in step S8040, the first UE may transmit SL HARQ feedback to the BS over a PUCCH and/or PUSCH based on Table 11.

[Table 11]

# 16.5 UE procedure for reporting HARQ-ACK on uplink

A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in clause 9, of the cell where the UE monitors PDCCH for detection of DCI format 3_0.

For SL configured grant Type 1 or Type 2 PSSCH transmissions by a UE within a time period provided by *sl-PeriodCG* the UE generates one HARQ-ACK information bit in response to the PSFCH receptions to multiplex in a PUCCH transmission occasion that is after a last time resource, in a set of time resources.

For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0.

From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable

- for one or more PSFCH reception occasions associated with SCI format 2-A with Cast type indicator field value of "10"

    - generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK

- for one or more PSFCH reception occasions associated with SCI format 2-A with Cast type indicator field value of "01"

    - generate ACK if the UE determines ACK from at least one PSFCH reception occasion, from the number of PSFCH reception occasions corresponding to PSSCH transmissions, in PSFCH resources corresponding to every identity $M_{ID}$ of the UEs that the UE expects to receive the PSSCH, as described in clause 16.3; otherwise, generate NACK

- for one or more PSFCH reception occasions associated with SCI format 2-B or SCI format 2-A with Cast type indicator field value of "11"

    - generate ACK when the UE determines absence of PSFCH reception for the last PSFCH reception occasion from the number of PSFCH reception occasions corresponding to PSSCH transmissions; otherwise, generate NACK

After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information.

The UE generates a NACK when, due to prioritization, as described in clause 16.2.4, the UE does not receive PSFCH in any PSFCH reception occasion associated with a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission.

The UE generates a NACK when, due to prioritization as described in clause 16.2.4, the UE does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization.

The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant.

Table 12 below shows details of selection and reselection of an SL relay UE defined in 3GPP TS 36.331. The contents of Table 12 are used as the prior art of the present disclosure, and related necessary details may be found in 3GPP TS 36.331.

[Table 12]

### 5.10.11.4 Selection and reselection of sidelink relay UE

A UE capable of sidelink remote UE operation that is configured by upper layers to search for a sidelink relay UE shall:

1> if out of coverage on the frequency used for sidelink communication, as defined in TS 36.304 [4], clause 11.4; or

1> if the serving frequency is used for sidelink communication and the RSRP measurement of the cell on which the UE camps (RRC_IDLE)/ the PCell (RRC_CONNECTED) is below *threshHigh* within *remoteUE-Config* :

  2> search for candidate sidelink relay UEs, in accordance with TS 36.133 [16]

  2> when evaluating the one or more detected sidelink relay UEs, apply layer 3 filtering as specified in 5.5.3.2 across measurements that concern the same ProSe Relay UE ID and using the *filterCoefficient* in *SystemInformationBlockType19* (in coverage) or the preconfigured *filterCoefficient* as defined in 9.3(out of coverage), before using the SD-RSRP measurement results;

NOTE 1: The details of the interaction with upper layers are up to UE implementation.

  2> if the UE does not have a selected sidelink relay UE:

    3> select a candidate sidelink relay UE which SD-RSRP exceeds *q-RxLevMin* included in either *reselectionInfoIC* (in coverage) or *reselectionInfoOoC* (out of coverage) by *minHyst*;

  2> else if SD-RSRP of the currently selected sidelink relay UE is below *q-RxLevMin* included in either *reselectionInfoIC* (in coverage) or *reselectionInfoOoC* (out of coverage); or if upper layers indicate not to use the currently selected sidelink relay: (i.e. sidelink relay UE reselection):

    3> select a candidate sidelink relay UE which SD-RSRP exceeds *q-RxLevMin* included in either *reselectionInfoIC* (in coverage) or *reselectionInfoOoC* (out of coverage) by *minHyst*;

  2> else if the UE did not detect any candidate sidelink relay UE which SD-RSRP exceeds *q-RxLevMin* included in either *reselectionInfoIC* (in coverage) or *reselectionInfoOoC* (out of coverage) by *minHyst*:

    3> consider no sidelink relay UE to be selected;

NOTE 2: The UE may perform sidelink relay UE reselection in a manner resulting in selection of the sidelink relay UE, amongst all candidate sidelink relay UEs meeting higher layer criteria, that has the best radio link quality. Further details, including interaction with upper layers, are up to UE implementation.

### 5.10.11.5 Sidelink remote UE threshold conditions

A UE capable of sidelink remote UE operation shall:

1> if the threshold conditions specified in this clause were not met:

  2> if *threshHigh* is not included in *remoteUE-Config* within *SystemInformationBlockType19*; or

  2> if *threshHigh* is included in *remoteUE-Config* within *SystemInformationBlockType19*; and the RSRP measurement of the PCell, or the cell on which the UE camps, is below *threshHigh* by *hystMax* (also included within *remoteUE-Config*):

    3> consider the threshold conditions to be met (entry);

1> else:

  2> if *threshHigh* is included in *remoteUE-Config* within *SystemInformationBlockType19*; and the RSRP measurement of the PCell, or the cell on which the UE camps, is above *threshHigh* (also included within *remoteUE-Config*):

    3> consider the threshold conditions not to be met (leave);

Sidelink (SL) Discontinuous Reception (DRX)

A MAC entity may be configured by an RRC as a DRX function of controlling a PDCCH monitoring activity of a UE for C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, AI-RNTI, SL-RNTI, SLCS-RNTI, and SL Semi-Persistent Scheduling V-RNTI of the MAC entity. When using a DRX operation, a MAC entity should monitor PDCCH according to prescribed requirements. When DRX is configured in RRC_CONNECTED, a MAC entity may discontinuously monitor PDCCH for all activated serving cells.

RRC may control a DRX operation by configuring the following parameters.

- drx-onDurationTimer : Duration time upon DRX cycle start
- drx-SlotOffset: Delay before drx-onDurationTimer start
- drx-InactivityTimer: Duration time after PDCCH that indicates new LTL or DL transmission for a MAC entity
- drx-RetransmissionTimerDL (per DL HARQ process except for the broadcast process): Maximum duration time until DL retransmission is received
- drx-RetransmissionTimerUL (per UL HARQ process): Maximum time until a grant for retransmission is received
- drx-LongCycleStartOffset: Long DRX cycle and drx-StartOffset that define a subframe in which Long and Short DRX cycles start
- drx-ShortCycle(optional): Short DRX cycle
- drx-ShortCycleTimer(optional): Period for a UE to follow a short CRX cycle
- drx-HARQ-RTT-TimerDL (per DL HARQ process except for the broadcast process): Minimum duration time before DL allocation for HARQ retransmission is predicted by a MAC entity
- drx-HARQ-RTT-TimerUL (per UL HARQ process): Minimum duration time before a UL HARQ retransmission grant is predicted by a MAC entity
- drx-RetransmissionTimerSL (per HARQ process): Maximum period until a grant for SL retransmission is received
- drx-HARQ-RTT-TimerSL (per HARQ process): Minimum duration time before an SL retransmission grant is predicted by a MAC entity
- ps-Wakeup(optional): Configuration for starting drx-on DurationTimer connected when DCP is monitored but not detected
- ps-TransmitOtherPeriodicCSI(optional): Configuration to report a periodic CSI that is not L1-RSRP on PUCCH for a time duration period indicated by drx-onDurationTimer when connected drx-onDurationTimer does not start despite that DCP is configured
- ps-TransmitPeriodicL1-RSRP(optional): Configuration to transmit a periodic CSI that is L1-RSRP on PUCCH for a time indicated by a drx-onDurationTimer when a connected drx-onDurationTimer does not start despite that DCP is configured

A serving cell of a MAC entity may be configured by RRC in two DRX groups having separate DRX parameters. When the RRC does not configure a secondary DRX group, a single DRX group exists only and all serving cells belong to the single DRX group. When two DRX groups are configured, each serving cell is uniquely allocated to each of the two groups. DRX parameters separately configured for each DRX group include drx-onDurationTimer and drx-InactivityTimer. A DRX parameter common to a DRX group is as follows.
drx-onDurationTimer, drx-InactivityTimer.

DRX parameters common to a DRX group are as follows.
drx-SlotOffset, drx-RetransmissionTimerDL, drx-Retrans drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL.

In addition, in a Uu DRX operation of the related art, drx-HARQ-RTT-TimerDL, drx-HARQ-RTT-TimerUL, drx-RetransmissionTimerDL, and drx-RetransmissionTimerUL are defined. When LTE HARQ retransmission is performed, it is secured to make transition to a sleep mode during RTT timer (drx-HARQ-RTT-TimerDL, drx-HARQ-RTT-TimerUL) or to maintain an active state during Retransmission Timer (drx-RetransmissionTimerDL, drx-RetransmissionTimerUL).

In addition, for details of SL DRX, SL DRX-related contents of TS 38.321 and R2-2111419 may be referred to as the related art.

Tables 13 to 16 below show the details of sidelink DRX disclosed in 3GPP TS 38.321 V16.2.1, which are used as the prior art of the present disclosure.

[Table 13]

The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6].

> NOTE 1: If Sidelink resource allocation mode 1 is configured by RRC, a DRX functionality is not configured.

RRC controls DRX operation by configuring the following parameters:

- *drx-onDurationTimer*: the duration at the beginning of a DRX cycle;

- *drx-SlotOffset*: the delay before starting the *drx-onDurationTimer*;

- *drx-InactivityTimer*: the duration after the PDCCH occasion in which a PDCCH indicates a new UL or DL transmission for the MAC entity;

- *drx-RetransmissionTimerDL* (per DL HARQ process except for the broadcast process): the maximum duration until a DL retransmission is received;

- *drx-RetransmissionTimerUL* (per UL HARQ process): the maximum duration until a grant for UL retransmission is received;

- *drx-LongCycleStartOffset*: the Long DRX cycle and *drx-StartOffset* which defines the subframe where the Long and Short DRX cycle starts;

- *drx-ShortCycle* (optional): the Short DRX cycle;

- *drx-ShortCycleTimer* (optional): the duration the UE shall follow the Short DRX cycle;

- *drx-HARQ-RTT-TimerDL* (per DL HARQ process except for the broadcast process): the minimum duration before a DL assignment for HARQ retransmission is expected by the MAC entity;

- *drx-HARQ-RTT-TimerUL* (per UL HARQ process): the minimum duration before a UL HARQ retransmission grant is expected by the MAC entity;

- *ps-Wakeup* (optional): the configuration to start associated *drx-onDurationTimer* in case DCP is monitored but not detected;

- *ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started;

- *ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started.

Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer*, *drx-InactivityTimer*. The DRX parameters that are common to the DRX groups are: *drx-SlotOffset*, *drx-RetransmissionTimerDL*, *drx-RetransmissionTimerUL*, *drx-LongCycleStartOffset*, *drx-ShortCycle* (optional), *drx-ShortCycleTimer* (optional), *drx-HARQ-RTT-TimerDL*, and *drx-HARQ-RTT-TimerUL*.

When a DRX cycle is configured, the Active Time for Serving Cells in a DRX group includes the time while:

- *drx-onDurationTimer* or *drx-InactivityTimer* configured for the DRX group is running; or

- *drx-RetransmissionTimerDL* or *drx-RetransmissionTimerUL* is running on any Serving Cell in the DRX group;

[Table 14]

or

- *ra-ContentionResolutionTimer* (as described in clause 5.1.5) or *msgB-ResponseWindow* (as described in clause 5.1.4a) is running; or

- a Scheduling Request is sent on PUCCH and is pending (as described in clause 5.4.4); or

- a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a).

When DRX is configured, the MAC entity shall:

1> if a MAC PDU is received in a configured downlink assignment:

2> start the *drx-HARQ-RTT-TimerDL* for the corresponding HARQ process in the first symbol after the end of the corresponding transmission carrying the DL HARQ feedback;

2> stop the *drx-RetransmissionTimerDL* for the corresponding HARQ process.

1> if a MAC PDU is transmitted in a configured uplink grant and LBT failure indication is not received from lower layers:

2> start the *drx-HARQ-RTT-TimerUL* for the corresponding HARQ process in the first symbol after the end of the first repetition of the corresponding PUSCH transmission;

2> stop the *drx-RetransmissionTimerUL* for the corresponding HARQ process.

1> if a *drx-HARQ-RTT-TimerDL* expires:

2> if the data of the corresponding HARQ process was not successfully decoded:

3> start the *drx-RetransmissionTimerDL* for the corresponding HARQ process in the first symbol after the expiry of *drx-HARQ-RTT-TimerDL*.

1> if a *drx-HARQ-RTT-TimerUL* expires:

2> start the *drx-RetransmissionTimerUL* for the corresponding HARQ process in the first symbol after the expiry of *drx-HARQ-RTT-TimerUL*.

1> if a DRX Command MAC CE or a Long DRX Command MAC CE is received:

2> stop *drx-onDurationTimer* for each DRX group;

2> stop *drx-InactivityTimer* for each DRX group.

1> if *drx-InactivityTimer* for a DRX group expires:

2> if the Short DRX cycle is configured:

3> start or restart *drx-ShortCycleTimer* for this DRX group in the first symbol after the expiry of *drx-InactivityTimer*;

3> use the Short DRX cycle for this DRX group.

2> else:

3> use the Long DRX cycle for this DRX group.

1> if a DRX Command MAC CE is received:

2> if the Short DRX cycle is configured:

3> start or restart *drx-ShortCycleTimer* for each DRX group in the first symbol after the end of DRX Command MAC CE reception;

[Table 15]

> > > 3> use the Short DRX cycle for each DRX group.

> > 2> else:

> > > 3> use the Long DRX cycle for each DRX group.

> 1> if *drx-ShortCycleTimer* for a DRX group expires:

> > 2> use the Long DRX cycle for this DRX group.

> 1> if a Long DRX Command MAC CE is received:

> > 2> stop *drx-ShortCycleTimer* for each DRX group;

> > 2> use the Long DRX cycle for each DRX group.

> 1> if the Short DRX cycle is used for a DRX group, and [(SFN × 10) + subframe number] modulo (*drx-ShortCycle*) = (*drx-StartOffset*) modulo (*drx-ShortCycle*):

> > 2> start *drx-onDurationTimer* for this DRX group after *drx-SlotOffset* from the beginning of the subframe.

> 1> if the Long DRX cycle is used for a DRX group, and [(SFN × 10) + subframe number] modulo (*drx-LongCycle*) = *drx-StartOffset*:

> > 2> if DCP monitoring is configured for the active DL BWP as specified in TS 38.213 [6], clause 10.3:

> > > 3> if DCP indication associated with the current DRX cycle received from lower layer indicated to start *drx-onDurationTimer*, as specified in TS 38.213 [6]; or

> > > 3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms prior to start of the last DCP occasion, or within BWP switching interruption length, or during a measurement gap, or when the MAC entity monitors for a PDCCH transmission on the search space indicated by *recoverySearchSpaceId* of the SpCell identified by the C-RNTI while the *ra-ResponseWindow* is running (as specified in clause 5.1.4); or

> > > 3> if *ps-Wakeup* is configured with value *true* and DCP indication associated with the current DRX cycle has not been received from lower layers:

> > > > 4> start *drx-onDurationTimer* after *drx-SlotOffset* from the beginning of the subframe.

> > 2> else:

> > > 3> start *drx-onDurationTimer* for this DRX group after *drx-SlotOffset* from the beginning of the subframe.

NOTE 2: In case of unaligned SFN across carriers in a cell group, the SFN of the SpCell is used to calculate the DRX duration.

> 1> if a DRX group is in Active Time:

> > 2> monitor the PDCCH on the Serving Cells in this DRX group as specified in TS 38.213 [6];

> > 2> if the PDCCH indicates a DL transmission:

> > > 3> start the *drx-HARQ-RTT-TimerDL* for the corresponding HARQ process in the first symbol after the end of the corresponding transmission carrying the DL HARQ feedback;

NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback.

> > > 3> stop the *drx-RetransmissionTimerDL* for the corresponding HARQ process.

> > > 3> if the PDSCH-to-HARQ_feedback timing indicate a non-numerical k1 value as specified in TS 38.213 [6]:

> > > > 4> start the *drx-RetransmissionTimerDL* in the first symbol after the PDSCH transmission for the corresponding HARQ process.

> > 2> if the PDCCH indicates a UL transmission:

[Table 16]

> > > 3> start the *drx-HARQ-RTT-TimerUL* for the corresponding HARQ process in the first symbol after the end of the first repetition of the corresponding PUSCH transmission;

> > > 3> stop the *drx-RetransmissionTimerUL* for the corresponding HARQ process.

> > 2> if the PDCCH indicates a new transmission (DL or UL) on a Serving Cell in this DRX group:

> > > 3> start or restart *drx-InactivityTimer* for this DRX group in the first symbol after the end of the PDCCH reception.

> > 2> if a HARQ process receives downlink feedback information and acknowledgement is indicated:

> > > 3> stop the *drx-RetransmissionTimerUL* for the corresponding HARQ process.

> 1> if DCP monitoring is configured for the active DL BWP as specified in TS 38.213 [6], clause 10.3; and

> 1> if the current symbol n occurs within *drx-onDurationTimer* duration; and

> 1> if *drx-onDurationTimer* associated with the current DRX cycle is not started as specified in this clause:

> > 2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause:

> > > 3> not transmit periodic SRS and semi-persistent SRS defined in TS 38.214 [7];

> > > 3> not report semi-persistent CSI configured on PUSCH;

> > > 3> if *ps-TransmitPeriodicL1-RSRP* is not configured with value *true*:

> > > > 4> not report periodic CSI that is L1-RSRP on PUCCH.

> > > 3> if *ps-TransmitOtherPeriodicCSI* is not configured with value *true*:

> > > > 4> not report periodic CSI that is not L1-RSRP on PUCCH.

> 1> else:

> > 2> in current symbol n, if a DRX group would not be in Active Time considering grants/assignments scheduled on Serving Cell(s) in this DRX group and DRX Command MAC CE/Long DRX Command MAC CE received and Scheduling Request sent until 4 ms prior to symbol n when evaluating all DRX Active Time conditions as specified in this clause:

> > > 3> not transmit periodic SRS and semi-persistent SRS defined in TS 38.214 [7] in this DRX group;

> > > 3> not report CSI on PUCCH and semi-persistent CSI configured on PUSCH in this DRX group.

> > 2> if CSI masking (*csi-Mask*) is setup by upper layers:

> > > 3> in current symbol n, if *drx-onDurationTimer* of a DRX group would not be running considering grants/assignments scheduled on Serving Cell(s) in this DRX group and DRX Command MAC CE/Long DRX Command MAC CE received until 4 ms prior to symbol n when evaluating all DRX Active Time conditions as specified in this clause; and

> > > > 4> not report CSI on PUCCH in this DRX group.

> NOTE 4: If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX group in which this PUCCH is configured, it is up to UE implementation whether to report this CSI multiplexed with other UCI(s).

Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected.

The MAC entity needs not to monitor the PDCCH if it is not a complete PDCCH occasion (e.g. the Active Time starts or ends in the middle of a PDCCH occasion).

Table 17 shows a part of Rel-17 V2X WID (RP-201385).

[Table 17]

| 4.1 Objective of SI or Core part WI<br>or Testing part WI |
| --- |

(continued)

| |
|---|
| The objective of this work item is to specify radio solutions that can enhance NR sidelink for the V2X, public safety and commercial use cases. |
| 1. Sidelink evaluation methodology update: Define evaluation assumption and performance metric for power saving by reusing TR 36.843 and/or TR 38.840 (to be completed by RAN#89) [RAN1]<br><br>    • Note: TR 37.885 is reused for the other evaluation assumption and performance metric. Vehicle dropping model B and antenna option 2 shall be a more realistic baseline for highway and urban grid scenarios.<br>2. Resource allocation enhancement:<br>    • Specify resource allocation to reduce power consumption of the UEs [RAN1, RAN2]<br>        • Baseline is to introduce the principle of Rel-14 LTE sidelink random resource selection and partial sensing to Rel-16 NR sidelink resource allocation mode 2.<br>        • Note: Taking Rel-14 as the baseline does not preclude introducing a new solution to reduce power consumption for the cases where the baseline cannot work properly.<br>    • Study the feasibility and benefit of the enhancement(s) in mode 2 for enhanced reliability and reduced latency in consideration of both PRR and PIR defined in TR37.885 (by RAN#91), and specify the identified solution if deemed feasible and beneficial [RAN1, RAN2]<br>        • Inter-UE coordination with the following until RAN#90.<br>            • A set of resources is determined at UE-A. This set is sent to UE-B in mode 2, and UE-B takes this into account in the resource selection for its own transmission.<br>    • Note: The study scope after RAN#90 is to be decided in RAN#90.<br>    • Note: The solution should be able to operate in-coverage, partial coverage, and out-of-coverage and to address consecutive packet loss in all coverage scenarios.<br>    • Note: RAN2 work will start after [RAN#89].<br>3. Sidelink DRX for broadcast, groupcast, and unicast [RAN2]<br>    • Define on- and off-durations in sidelink and specify the corresponding UE procedure<br>    • Specify mechanism aiming to align sidelink DRX wake-up time among the UEs communicating with each other<br>    • Specify mechanism aiming to align sidelink DRX wake-up time with Uu DRX wake-up time in an in-coverage UE<br>4. Support of new sidelink frequency bands for single-carrier operations [RAN4]<br>    • Support of new sidelink frequency bands should ensure coexistence between sidelink and Uu interface in the same and adjacent channels in licensed spectrum.<br>    • The exact frequency bands are to be determined based on company input during the WI, considering both licensed and ITS-dedicated spectrum in both FR1 and FR2.<br>5. Define mechanism to ensure sidelink operation can be confined to a predetermined geographic area(s) for a given frequency range within non-ITS bands [RAN2].<br>    • This applies areas where there is no network coverage.<br>6. UE Tx and Rx RF requirement for the new features introduced in this WI [RAN4]<br>7. UE RRM core requirement for the new features introduced in this WI [RAN4] |

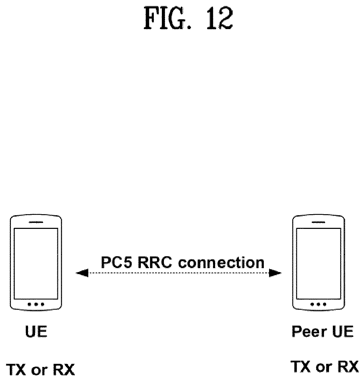

FIG. 12 illustrates a relationship between a UE and a peer LTE. In SL communication, any one SL UE (UE in FIG. 12) may establish a PC5 RRC connection with another UE. In this case, the other UE that establishes the PC5 RRC connection is referred to as the peer UE. When the PC5 RRC connection is established, both the UE and the peer UE may transmit (TX) or receive (RX) an SL signal to and from each other.

Table 18 shows UE operations when radio link failure (RLF) occurs, which are defined in the 3GPP specification. The UE operations are used as the prior art of the present disclosure.

[Table 18]

| |
| --- |
| 5.8.8 Sidelink communication transmission<br><br>A UE capable of NR sidelink communication that is configured by upper layers to transmit NR sidelink communication and has related data to be transmitted shall:<br><br>1> if the conditions for NR sidelink communication operation as defined in 5.8.2 are met:<br><br>2> if the frequency used for NR sidelink communication is included in *sl-FreqInfoToAddModList* in *sl-ConfigDedicatedNR* within *RRCReconfiguration* message or included in *sl-ConfigCommonNR* within *SIB12*:<br><br>3> if the UE is in RRC_CONNECTED and uses the frequency included in *sl-ConfigDedicatedNR* within *RRCReconfiguration* message:<br><br>4> if the UE is configured with *sl-ScheduledConfig*:<br><br>5> if T310 for MCG or T311 is running; and if *sl-TxPoolExceptional* is included in *sl-FreqInfoList* for the concerned frequency in *SIB12* or included in *sl-ConfigDedicatedNR* in *RRCReconfiguration*; or<br><br>5> if T301 is running and the cell on which the UE initiated RRC connection re-establishment provides *SIB12* including *sl-TxPoolExceptional* for the concerned frequency; or<br><br>5> if T304 for MCG is running and the UE is configured with *sl-TxPoolExceptional* included in *sl-ConfigDedicatedNR* for the concerned frequency in *RRCReconfiguration*:<br><br>6> configure lower layers to perform the sidelink resource allocation mode 2 based on random selection using the pool of resources indicated by *sl-TxPoolExceptional* as defined in TS 38.321 [3];<br><br>5> else:<br><br>6> configure lower layers to perform the sidelink resource allocation mode 1 for NR sidelink communication;<br><br>5> if T311 is running, configure the lower layers to release the resources indicated by *rrc-ConfiguredSidelinkGrant* (if any);<br><br>4> if the UE is configured with *sl-UE-SelectedConfig*:<br><br>5> if a result of sensing on the resources configured in *sl-TxPoolSelectedNormal* for the concerned frequency included in *sl-ConfigDedicatedNR* within *RRCReconfiguration* is not available in accordance with TS 38.214 [19];<br><br>6> if *sl-TxPoolExceptional* for the concerned frequency is included in *RRCReconfiguration*; or<br><br>6> if the PCell provides *SIB12* including *sl-TxPoolExceptional* in *sl-FreqInfoList* for the concerned frequency:<br><br>7> configure lower layers to perform the sidelink resource allocation mode 2 based on random selection using the pool of resources indicated by *sl-TxPoolExceptional* as defined in TS 38.321 [3];<br><br>5> else, if the *sl-TxPoolSelectedNormal* for the concerned frequency is included in the *sl-ConfigDedicatedNR* within *RRCReconfiguration*:<br><br>6> configure lower layers to perform the sidelink resource allocation mode 2 based on sensing (as defined in TS 38.321 [3] and TS 38.214 [19]) using the pools of resources indicated by *sl-TxPoolSelectedNormal* for the concerned frequency;<br><br>3> else:<br><br>4> if the cell chosen for NR sidelink communication transmission provides *SIB12*:<br><br>5> if *SIB12* includes *sl-TxPoolSelectedNormal* for the concerned frequency, and a result of sensing on the resources configured in the *sl-TxPoolSelectedNormal* is available in accordance with TS 38.214 [19] |
| 6> configure lower layers to perform the sidelink resource allocation mode 2 based on sensing using the pools of resources indicated by *sl-TxPoolSelectedNormal* for the concerned frequency as defined in TS 38.321 [3];<br><br>5> else if *SIB12* includes *sl-TxPoolExceptional* for the concerned frequency:<br><br>6> from the moment the UE initiates RRC connection establishment or RRC connection resume, until receiving an *RRCReconfiguration* including *sl-ConfigDedicatedNR,* or receiving an *RRCRelease* or an *RRCReject*; or<br><br>6> if a result of sensing on the resources configured in *sl-TxPoolSelectedNormal* for the concerned frequency in *SIB12* is not available in accordance with TS 38.214 [19]: |

(continued)

| 5.8.8 Sidelink communication transmission |
|---|
| 7> configure lower layers to perform the sidelink resource allocation mode 2 based on random selection (as defined in TS 38.321 [3]) using one of the pools of resources indicated by *sl-TxPoolExceptional* for the concerned frequency;<br>2> else:<br>3> configure lower layers to perform the sidelink resource allocation mode 2 based on sensing (as defined in TS 38.321 [3] and TS 38.213 [13]) using the pools of resources indicated by *sl-TxPoolSelectedNormal* in *SidelinkPreconfigNR* for the concerned frequency.<br>NOTE 1: The UE continues to use resources configured in *rrc-ConfiguredSidelinkGrant* (while T310 is running) until it is released (i.e. until T310 has expired). The UE does not use sidelink configured grant type 2 resources while T310 is running.<br>NOTE 2: In case of RRC reconfiguration with sync, the UE uses resources configured in *rrc-ConfiguredSidelinkGrant* (while T304 on the MCG is running) if provided by the target cell.<br>NOTE 1: If the MAC entity is configured with Sidelink resource allocation mode 2 to transmit using a pool of resources in a carrier as indicated in TS 38.331 [5] or TS 36.331 [21], the MAC entity can create a selected sidelink grant on the pool of resources based on random selection or sensing only after releasing configured sidelink grant (s), if any. |

Table 19 below shows a document contributed to the RAN2#117 SL Enh meeting, which contains the following content: SL DRX is capable of being reconfigured when a UE uses an exceptional resource pool for the following cases: RLF occurrence in a Uu link, RLF recovery, and handover (HO).

[Table 19]

| For unicast and TX UE in RRC CONNECTED, It is agreed that the serving gNB of mode 1 RA TX UE determines the SL DRX configurations for RX UE, and Mode 2 RA TX UE determines SL DRX for RX UE.<br>As we know, if TX UE is configured with exceptional sidelink resource pool to perform sidelink transmission, when it detects Uu RLF, the RA mode of TX UE will be changed from mode 1 to mode 2, in which case the TX UE determines SL DRX for RX UE. Considering that the exceptional sidelink resource pool may be different with mode 1 normal sidelink resource pool, available sidelink transmission resource of the TX UE may be changed when the timer T310/T311 is running. Therefore, the TX UE can reconfigure SL DRX configuration |
|---|
| for the RX UE by its own when the timer T310/T311 is running and exceptional sidelink resource pool is configured.<br>For another case, during the handover procedure, according to current specification, the HandoverPreparationInformation-IEs is sent from source gNB to target gNB, it includes the sidelinkUEinformation and UEAssistanceInformation. Besides that, the HandoverCommand is sent from target gNB to source gNB, and RRCReconfiguration is included. Which means current specification support that the target cell provides the SL DRX configuration for the RX UE to the TX UE via source cell during the handover procedure. However, as we know, before the TX UE completes handover to the target cell, the TX UE may be configure with exceptional sidelink resource pool. Similar as Uu RLF, the TX UE can reconfigure SL DRX configuration for the RX UE by its own when the timer T304 is running.<br>Observation 1: When the timer 1310/1311/1304 of the TX UE is running, the TX UE may need to use exceptional sidelink resource pool to perform sidelink transmission. So the available sidelink transmission resource of the TX UE may be changed.<br>Proposal 1 The TX UE can reconfigure SL DRX configuration for the RX UE by its own when the timer T31 0/1311/T304 is running and exceptional sidelink resource pool is configured. |

In Table 19, T310, T311, and T304 refers to RRC connection related timers. Specifically, timer T310 is used when there is detected a physical layer problem in an SpCell, timer T311 is used in the RRC connection re-establishment process, and timer T304 is used in the handover process. Table 20 below shows the initiation, stop, and expiration of each timer.

[Table 20]

| Timer | Start | Stop | At expiry |
|---|---|---|---|
| T310 | Upon detecting physical layer problems for the SpCell i.e. upon receiving N310 consecutive out-of-sync indications from lower layers . | Upon receiving N311 consecutive in-sync indications from lower layers for the SpCell, upon receiving RRCReconfiguration with *reconfigurationWithSync* for that cell group, upon reception of *MobilityFromNRCommand,* upon the reconfiguration of *rlf-TimersAndConstant,* upon initiating the connection re-establishment procedure, upon conditional reconfiguration execution i.e. when applying a stored RRCReconfiguration message including *reconfigurationWithSync* for that cell group, and upon initiating the MCG failure information procedure.<br><br>Upon SCG release, if the T310 is kept in SCG. | If the T310 is kept in MCG: If AS security is not activated: go to RRC IDLE else: initiate the MCG failure information procedure as specified in 5.7.3b or the connection re-establishment procedure as specified in 5.3.7 or the procedure as specified in 5.3.10.3 if any DAPS bearer is configured .<br>If the T310 is kept in SCG, Inform E-UTRANINR about the SCG radio link failure by initiating the SCG failure information procedure as specified in 5.7.3. |
| T311 | Upon initiating the RRC connection re-establishment procedure | Upon selection of a suitable NR cell or a cell using another RAT. | Enter RRC IDLE |
| T304 | Upon reception of RRCReconfiguration message including reconfigurationWithSync or upon conditional reconfiguration execution i.e. when applying a stored RRCReconfiguration message including reconfigurationWithSync. | Upon successful completion of random access on the corresponding SpCell<br>For T304 of SCG, upon SCG release | For T304 of MCG, in case of the handover from NR or intra-NR handover, initiate the RRC re-establishment procedure; In case of handover to NR, perform the actions defined in the specifications applicable for the source RAT. If any DAPS bearer is configured and if there is no RLF in source PCell, initiate the failure information procedure.<br>For T304 of SCG, inform network about the reconfiguration with sync failure by initiating the SCG failure information procedure as specified in 5.7.3. |

According to the above content, an exceptional pool (sl-TxPoolExceptional) may be used while timers T310, T311, and T304 are running. However, if there is a CG resource configured by the BS, the CG resource may be continuously used. On the other hand, if there is no CG resource, a resource may be selected by random selection from the exceptional pool.

Hereinafter, a description will be given of embodiments of how a transmitter (TX) UE operates when the TX UE reconfigures SL DRX.

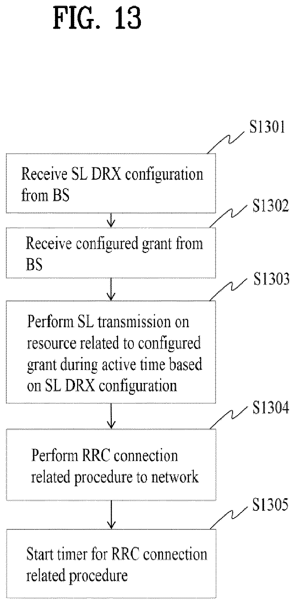

According to an embodiment, the TX LTE may receive a SL DRX configuration from the BS (S1301 in FIG. 13). The TX LTE may receive a CG from the BS (S1302). To perform SL transmission, the TX UE may use resources related to the CG during an active time based on the SL DRX configuration (S1303). The TX UE may perform an RRC connection related procedure to the network (S1304), and the TX LTE may start a timer for the RRC connection related procedure (S1305).

Here, the TX UE may perform transmission based on the SL DRX configuration in the exceptional pool of the CG after starting the timer. The SL DRX configuration may be maintained until the timer expires. That is, the TX LTE may randomly select a resource from the exceptional pool based on the active time. The TX UE may reconfigure the SL DRX configuration based on the expiration of the timer. The timer may be one of the following timers: T310, T311, and T304, and the RRC connection related procedure may be one of an RRC connection re-establishment procedure and an RRC reconfiguration procedure.

That is, when the exceptional pool is configured while timers T310, T311, and T304 are running, if the TX UE performs random selection in the exceptional pool, the TX UE may randomly select a resource only during the active time based on the SL DRX configuration configured by the gNB and then perform communication according to the corresponding SL DRX configuration. In this case, after timers T310, T311, and T304 expire, the TX UE may reconfigure SL DRX. This is considering that the Uu link of the TX UE may be recovered. It may be interpreted to mean that in mode 1, the SL DRX reconfiguration operation is not allowed while timer T310/T311 is running. That is, even while timer T310/T311 is running, the TX UE may use the SL DRX configuration configured by the serving gNB of the TX UE as it is. When the exceptional pool is configured, the TX UE may randomly select a resource within the active time of SL DRX. On the other hand, when the exceptional pool is not configured, the TX LTE may use an existing CG resource as it is. Accordingly, an SL DRX reconfiguration time may be determined so that the SL DRX is reconfigured only when the timer expires.

The timer may expire in the following cases: when a new suitable cell is discovered, when RLF is confirmed, or when random access is successful. According to the above-described embodiment, when the new suitable cell is discovered or when the RLF is confirmed, the SL DRX may be reconfigured, and the previous SL DRX configuration may be maintained until the reconfiguration. Accordingly, the LTE may maintain the previous SL DRX configuration as much as possible even while the UE has RLF in the current serving cell or the UE searches for another suitable cell, thereby preventing the UE from frequently reconfiguring the SL DRX.

The TX UE may use the resources related to the CG even if the transmission mode changes. Here, the change of the transmission mode may be a change from transmission mode 1 to transmission mode 2. The TX UE may randomly select a resource from the exceptional pool based on transmission mode 2. That is, when the operating mode of the TX UE switches from mode 1 to mode 2 while timer T310 or T311 is running, the TX UE may perform transmission by selecting a resource from the exceptional pool (according to mode 2) without selecting a CG resource in spite of the presence of the CG resource. In this case, while performing SL DRX, the TX UE may reconfigure SL DRX to a receiver (RX) UE. Even after the transmission mode changes as described above, the resource and DRX configuration indicated to the RX UE may be maintained as much as possible, thereby reducing the reconfiguration and improving the resource efficiency. Here, the change of the transmission mode may mean a change from mode 1 to mode 2 in case of handover failure.

In addition, when a mode 1 grant, for example, type 1 is configured, and/or when no exceptional pool is configured, if a timer (e.g., T310 or T311) is running, the TX UE may continue to use the mode1 grant (including the exception pool), so that the RX LTE may not be allowed to reconfigure SL DRX.

If the operating mode of the TX LTE changes from RRC_CONNECTED mode 2 to RRC_IDLE/INACTIVE mode 2 while timers T310 and T311 are running, whether the TX UE reconfigures SL DRX may be determined depending on the implementation of the TX UE.

In relation to the above description, a TX LTE may include: at least one processor; and at least one computer memory operably connectable to the at least one processor and configured to store instructions that, when executed, cause the at least one processor to perform operations. The operations may include: receiving, by the TX UE, a SL DRX configuration from a BS; receiving, by the TX UE, a CG from the BS; performing, by the TX UE, SL transmission on a resource related to the CG during an active time based on the SL DRX configuration; performing, by the TX UE, an RRC connection related procedure to a network; and starting, by the TX UE, a timer for the RRC connection related procedure. The TX UE may perform transmission in an exceptional pool of the CG based on the SL DRX configuration after starting the timer. The SL DRX configuration may be maintained until expiration of the timer.

The TX UE may be configured to communicate with at least one of another UE, a LTE related to an autonomous vehicle, the BS, or the network.

There is provided a processor configured to perform operations for a TX LTE in a wireless communication system. The operations may include: receiving, by the TX UE, an SL DRX configuration from a BS; receiving, by the TX UE, a CG from the BS; performing, by the TX UE, SL transmission on a resource related to the CG during an active time based on the SL DRX configuration; performing, by the TX UE, an RRC connection related procedure to a network; and starting, by the TX UE, a timer for the RRC connection related procedure. The TX LTE may perform transmission in an exceptional pool of the CG based on the SL DRX configuration after starting the timer. The SL DRX configuration may be maintained until expiration of the timer.

There is provided a non-volatile computer-readable storage medium configured to store at least one computer program including instructions that, when executed by at least one processor, cause the at least one processor to perform operations for a TX LTE. The operations may include: receiving, by the TX UE, an SL DRX configuration from a BS; receiving, by the TX UE, a CG from the BS; performing, by the TX UE, SL transmission on a resource related to the CG during an active time based on the SL DRX configuration; performing, by the TX UE, an RRC connection related procedure to a network; and starting, by the TX UE, a timer for the RRC connection related procedure. The TX LTE may perform transmission in an exceptional pool of the CG based on the SL DRX configuration after starting the timer. The SL DRX configuration may be maintained until expiration of the timer.

There is provided a method of operating a BS in relation to RRC of a TX UE performing an SL DRX operation in a wireless communication system. The method may include: transmitting, by the BS, an SL DRX configuration to the TX UE; transmitting, by the BS, a CG to the TX UE; and performing, by the BS, an RRC connection related procedure with the TX UE. The TX UE may perform SL transmission on a resource related to the CG during an active time based on the SL DRX configuration. The TX UE may be configured to start a timer for the RRC connection related procedure. The TX LTE may perform transmission in an exceptional pool of the CG based on the SL DRX configuration after starting the timer. The SL DRX configuration may be maintained until expiration of the timer.

In addition, operations of a BS related to the above-described TX UE may include: transmitting an SL DRX configuration to the TX UE; transmitting, by the BS, a CG to the TX UE; and performing, by the BS, an RRC connection related procedure with the TX UE. The TX UE may perform SL transmission on a resource related to the CG during an active time based on the SL DRX configuration. The TX UE may be configured to start a timer for the RRC connection related procedure. The TX UE may perform transmission in an exceptional pool of the CG based on the SL DRX configuration after starting the timer. The SL DRX configuration may be maintained until expiration of the timer.

The proposals of the present disclosure may be extended and applied to solve a problem that loss occurs due to interruption caused by Uu bandwidth part (BWP) switching. In addition, the proposals of the present disclosure may be extended and applied to solve a problem that loss occurs due to interruption caused by SL BWP switching when a UE supports multiple SL BWPs.

The proposals of the present disclosure may be applied not only to parameters (and timers) included in a default/common SL DRX configuration, a default/common SL DRX pattern, or a default/common SL DRX configuration but also to parameters (and timers) included in a UE-pair specific SL DRX configuration, a LTE-pair specific SL DRX pattern, or a UE-pair specific SL DRX configuration. In addition, the term "ON duration" mentioned in this document may be extended and interpreted as an active time period (i.e., a duration in which the UE operates in wake-up mode (RF module is "On") to receive/transmit wireless signals). The term "OFF duration" may be extended and interpreted as a sleep time period (i.e., a duration in which the UE operates in sleep mode (RF module is "Off') for power saving) (which does not mean that the transmitting UE needs to operate in the sleep mode during the sleep time period) (if necessary, the transmitting UE is allowed to operate in active mode for a while for the sensing operation/transmission operation even within the sleep time). In addition, the application of the proposed methods/rules according to the present disclosure and/or the parameters related thereto (e.g., threshold) may be configured specifically (differently or independently) depending on resource pools, congestion levels, service priorities (and/or types), QoS requirements (e.g., latency, reliability, etc.), PC5 5QIs (PQI), traffic types (e.g., periodic (or aperiodic) generation), SL transmission resource allocation modes (e.g., mode 1, mode 2), etc.

For example, the application of the proposed rules of the present disclosure (and/or related parameter configuration values) may be configured specifically (independently and/or differently) for at least one of a resource pool, a service/packet type (and/or priority), QoS requirements (e.g., URLLC/EMBB traffic, reliability, latency, etc.), a PQI, a cast type (e.g., unicast, groupcast, broadcast), a (resource pool) congestion level (e.g., CBR), SL HARQ feedback (e.g., NACK only feedback, ACK/NACK feedback), transmission of a HARQ feedback enabled MAC PDU (and/or HARQ feedback disabled MAC PDU), configuration of a PUCCH-based SL HARQ feedback reporting operation, pre-emption (and/or re-evaluation) (or resource reselection based thereon), a (L2 or L1) (source and/or destination) identifier, a (L2 or L1) identifier (of a combination of source layer ID and destination layer ID), a (L2 or L1) identifier of (a combination of a cast type with a pair of a source layer ID and a destination layer ID, a PC5 RRC connection/link, SL DRX, an SL mode type (resource allocation mode 1, resource allocation mode 2, etc.), or periodic (or aperiodic) resource reservation.

The term "specific time" used in this document may refer to a predefined time period during which the UE operates in active mode according to a specific timer in order to receive SL data or signals from another LTE (where the specific timer refers to an SL DRX retransmission timer, an SL DRX inactivity timer, or a timer that guarantees the LTE to operate in active mode during the DRX operation of the RX LTE). In addition, the application of the proposal and proposed rules of the present disclosure (and/or related parameter configuration values) may also be applied to millimeter wave (mmWave) SL operations.

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

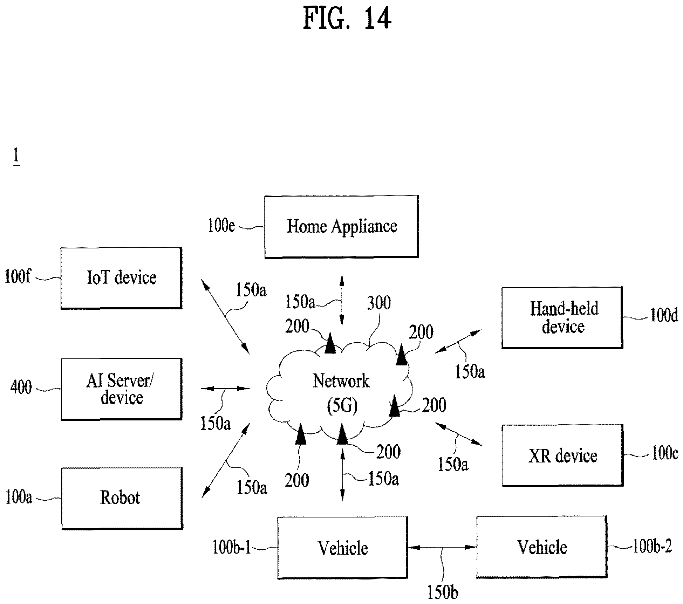

FIG. 14 illustrates a communication system 1 applied to the present disclosure.

Referring to FIG. 14, a communication system 1 applied to the present disclosure includes wireless devices, BSs, and a network. Herein, the wireless devices represent devices performing communication using RAT (e.g., 5G NR or LTE) and may be referred to as communication/radio/SG devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as LTL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

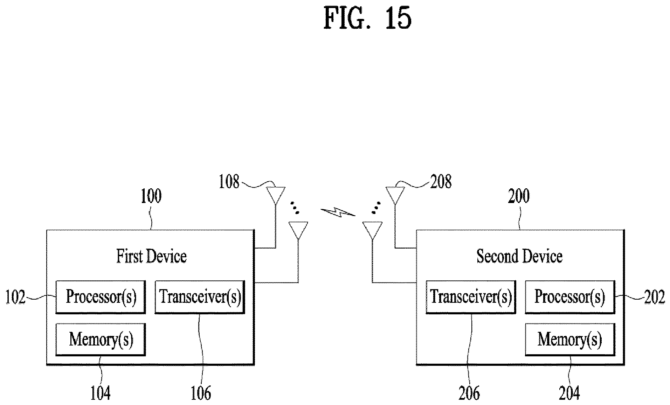

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

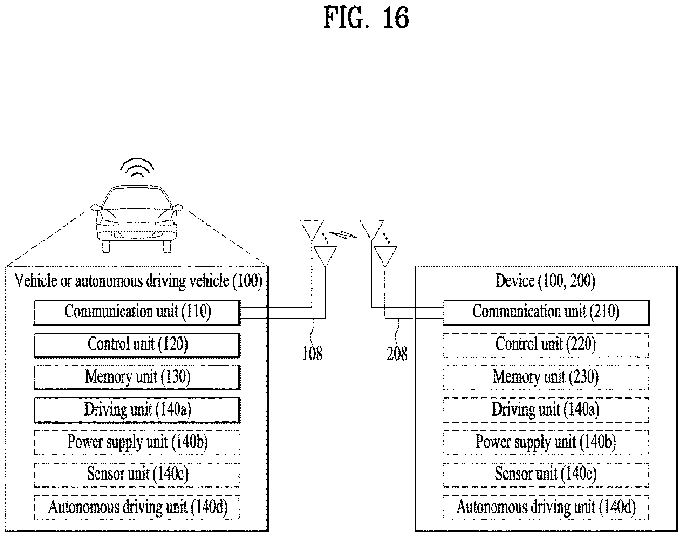

FIG. 16 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 16, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

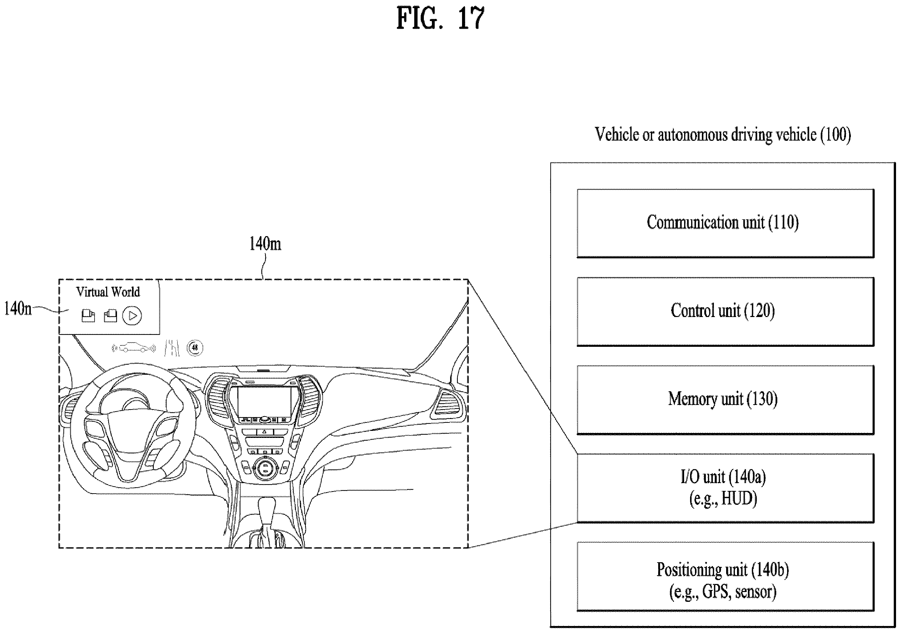

FIG. 17 illustrates a vehicle applied to the present disclosure. The vehicle may be implemented as a transport means, an aerial vehicle, a ship, etc.

Referring to FIG. 17, a vehicle 100 may include a communication unit 110, a control unit 120, a memory unit 130, an I/O unit 140a, and a positioning unit 140b.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

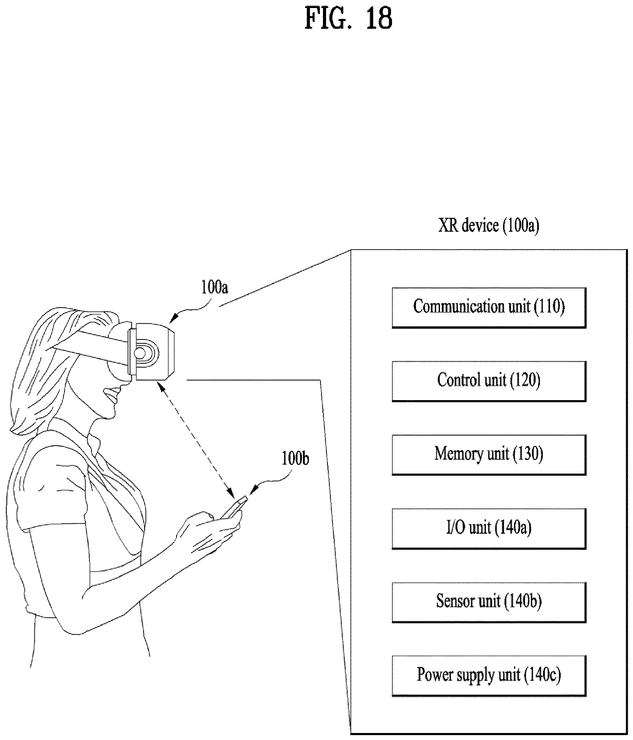

FIG. 18 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 18, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

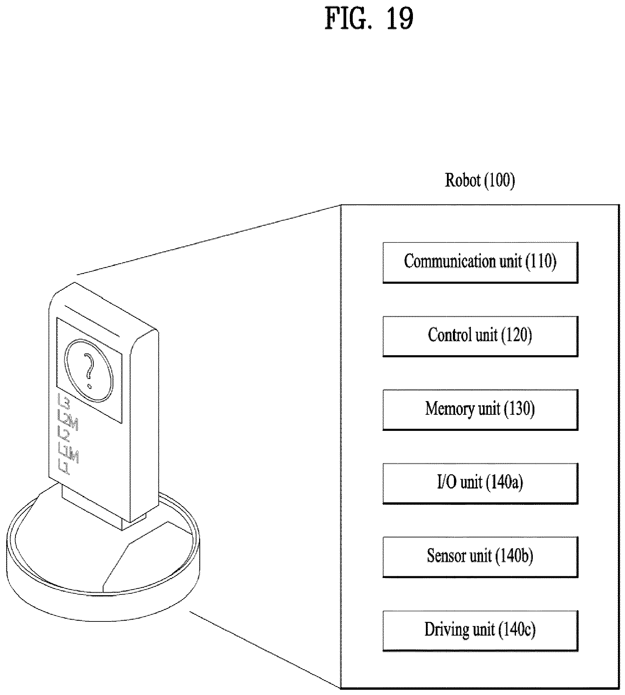

FIG. 19 illustrates a robot applied to the present disclosure. The robot may be categorized into an industrial robot, a medical robot, a household robot, a military robot, etc., according to a used purpose or field.

Referring to FIG. 19, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 15, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

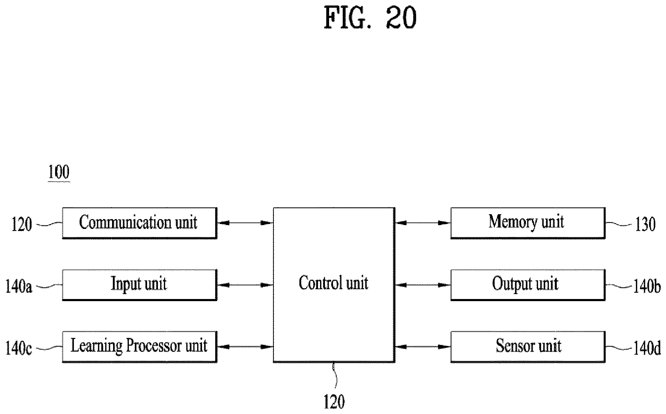

FIG. 20 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 20, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140 of FIG. 15, respectively.

The communication unit 110 may transmit and receive wired/radio signals (e.g., sensor information, user input, learning models, or control signals) to and from external devices such as other AI devices (e.g., 100x, 200, or 400 of FIG. 14) or an AI server (e.g., 400 of FIG. 14) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 14). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 14). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

As is apparent from the above description, the present disclosure has effects as follows.

According to an embodiment, a LTE may maintain a previous SL DRX configuration as much as possible while the UE has RLF in a current serving cell or the UE searches for another suitable cell, thereby preventing the LTE from frequently reconfiguring SL DRX.

It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

**Claims**

1. A method of performing a radio resource control (RRC) related operation by a transmitter (TX) user equipment (UE) performing a sidelink (SL) discontinuous reception (DRX) operation in a wireless communication system, the method comprising:

   receiving, by the TX UE, an SL DRX configuration from a base station;
   receiving, by the TX UE, a configured grant from the base station;
   performing, by the TX UE, SL transmission on a resource related to the configured grant during an active time based on the SL DRX configuration;
   performing, by the TX UE, an RRC connection related procedure to a network; and
   starting, by the TX UE, a timer for the RRC connection related procedure,
   wherein the TX UE performs transmission in an exceptional pool of the configured grant based on the SL DRX configuration after starting the timer, and
   wherein the SL DRX configuration is maintained until expiration of the timer.

2. The method of claim 1, wherein the TX LTE randomly selects a resource from the exceptional pool based on the active time.

3. The method of claim 1, wherein the RRC connection related procedure is one of an RRC connection re-establishment procedure and an RRC reconfiguration procedure.

4. The method of claim 1, wherein the TX UE reconfigures the SL DRX configuration based on the expiration of the timer.

5. The method of claim 1, wherein the timer expires based on that a new suitable cell is discovered, that radio link failure (RLF) is confirmed, or that random access is successful.

6. The method of claim 1, wherein the TX UE uses the resource related to the configured grant despite a change of a transmission mode.

7. The method of claim 1, wherein a transmission mode changes from transmission mode 1 to transmission mode 2, and wherein the TX UE randomly selects a resource from the exceptional pool based on transmission mode 2.

8. The method of claim 1, wherein the timer is one of timer T310, timer T311, and timer T304.

9. The method of claim 1, wherein the configured grant is configured grant type 1.

10. A transmitter (TX) user equipment (UE) in a wireless communication system, the TX LTE comprising:

    at least one processor; and
    at least one computer memory operably connectable to the at least one processor and configured to store instructions that, when executed, cause the at least one processor to perform operations comprising:

       receiving, by the TX UE, an sidelink (SL) discontinuous reception (DRX) configuration from a base station;
       receiving, by the TX UE, a configured grant from the base station;
       performing, by the TX UE, SL transmission on a resource related to the configured grant during an active time based on the SL DRX configuration;
       performing, by the TX UE, a radio resource control (RRC) connection related procedure to a network; and
       starting, by the TX UE, a timer for the RRC connection related procedure,
       wherein the TX UE performs transmission in an exceptional pool of the configured grant based on the SL DRX configuration after starting the timer, and
       wherein the SL DRX configuration is maintained until expiration of the timer.

11. The TX UE of claim 10, wherein the TX UE is configured to communicate with at least one of another LTE, a UE related to an autonomous vehicle, the base station, or the network.

12. A method of operating a base station in relation to radio resource control (RRC) of a transmitter (TX) user equipment (UE) performing a sidelink (SL) discontinuous reception (DRX) operation in a wireless communication system, the method comprising:

transmitting, by the base station, an SL DRX configuration to the TX UE;
transmitting, by the base station, a configured grant to the TX UE; and
performing, by the base station, an RRC connection related procedure with the TX UE,
wherein the TX UE is configured to perform SL transmission on a resource related to the configured grant during an active time based on the SL DRX configuration,
wherein the TX UE is configured to start a timer for the RRC connection related procedure,
wherein the TX UE performs transmission in an exceptional pool of the configured grant based on the SL DRX configuration after starting the timer, and
wherein the SL DRX configuration is maintained until expiration of the timer.

## FIG. 1

Evolution to 5G,
while maintaining backward compatibility

Advanced use cases
5G V2X R16

Enhanced safety
C-V2X R14/15

Higher throughput
Higher reliability

Wideband raging
and positioning
Lower latency

Basic safety
802.11p or C-V2X R14

Enhanced range and reliability

Vehicle
Platooning

Extended
Sensors

Remote
Driving

Advanced
Driving

# FIG. 2

# FIG. 3

(a)

(b)

EP 4 231 768 A1

# FIG. 4

# FIG. 5

gNB

| Inter-Cell RRM |
| :---: |
| RB Control |
| Connection Mobility Control |
| Radio Access Control |
| Measurement Configuration and Provisioning |
| Dynamic Resource Allocation (Scheduler) |

NG-RAN

AMF

| NAS Security |
| :---: |
| Idle-State Mobility Processing |

SMF

| UE IP Address Allocation |
| :---: |
| PDU Session Control |

UPF

| Mobility Anchoring |
| :---: |
| PDU Processing |

5GC

Internet

EP 4 231 768 A1

# FIG. 6

# FIG. 7

# FIG. 8

PU5-U

(a)

PU5-C

(b)

# FIG. 9

(a)

(b)

GNSS

Directly Synchronized with BS

Directly Synchronized
with GNSS  (Out Coverage)

Directly Synchronized with GNSS
(In Coverage)

BS

Indirectly Synchronized with BS

Network Coverage

Indirectly Synchronized with GNSS

Independent Synchronization Source

FIG. 10

# FIG. 11

(a)                              (b)

# FIG. 12

PC5 RRC connection

UE

Peer UE

TX or RX

TX or RX

# FIG. 13

```
                                              S1301
┌─────────────────────────────┐
│ Receive SL DRX configuration │
│ from BS                      │
└─────────────────────────────┘      S1302
              ↓
┌─────────────────────────────┐
│ Receive configured grant from│
│ BS                           │
└─────────────────────────────┘      S1303
              ↓
┌─────────────────────────────┐
│ Perform SL transmission on   │
│ resource related to configured│
│ grant during active time based│
│ on SL DRX configuration      │
└─────────────────────────────┘      S1304
              ↓
┌─────────────────────────────┐
│ Perform RRC connection       │
│ related procedure to network │
└─────────────────────────────┘      S1305
              ↓
┌─────────────────────────────┐
│ Start timer for RRC connection│
│ related procedure            │
└─────────────────────────────┘
```

# FIG. 14

1

100e — Home Appliance

100f — IoT device

150a

150a — 300

200 —

Network (5G)

200

Hand-held device — 100d

150a

400 — AI Server/ device

150a

200

200

XR device — 100c

100a — Robot

150a

200

200 — 150a

150a

100b-1 — Vehicle

Vehicle — 100b-2

150b

...

# FIG. 15

# FIG. 16

| Vehicle or autonomous driving vehicle (100) | | Device (100, 200) |
|---|---|---|
| Communication unit (110) | | Communication unit (210) |
| Control unit (120) | | Control unit (220) |
| Memory unit (130) | | Memory unit (230) |
| Driving unit (140a) | | Driving unit (140a) |
| Power supply unit (140b) | | Power supply unit (140b) |
| Sensor unit (140c) | | Sensor unit (140c) |
| Autonomous driving unit (140d) | | Autonomous driving unit (140d) |

108          208

# FIG. 17

Vehicle or autonomous driving vehicle (100)

| |
|---|
| Communication unit (110) |
| Control unit (120) |
| Memory unit (130) |
| I/O unit (140a) (e.g., HUD) |
| Positioning unit (140b) (e.g., GPS, sensor) |

140m

140n

Virtual World

# FIG. 18

XR device (100a)

| Communication unit (110) |
| Control unit (120) |
| Memory unit (130) |
| I/O unit (140a) |
| Sensor unit (140b) |
| Power supply unit (140c) |

# FIG. 19

Robot (100)

Communication unit (110)

Control unit (120)

Memory unit (130)

I/O unit (140a)

Sensor unit (140b)

Driving unit (140c)

# FIG. 20

Europäisches
Patentamt

European
Patent Office

Office européen
des brevets

# EUROPEAN SEARCH REPORT

**Application Number**

EP 23 15 6689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/147959 A1 (FG INNOVATION CO LTD [CN]) 29 July 2021 (2021-07-29)<br>* abstract *<br>* paragraphs [0032], [0033], [0072] – [0075], [0082], [0090], [0109] – [0113] *<br>* figure 4 * | 1-12 | INV.<br>H04W76/19<br>H04W76/28<br><br>ADD.<br>H04W88/02<br>H04W88/08 |
| A | WO 2021/158060 A1 (SAMSUNG ELECTRONICS CO LTD [KR]) 12 August 2021 (2021-08-12)<br>* the whole document * *<br>& US 2023/107246 A1 (KANG HYUNJEONG [KR] ET AL) 6 April 2023 (2023-04-06)<br>* abstract *<br>* paragraphs [0045] – [0050], [0153] – [0161], [0171] – [0172], [0247] – [0248] *<br>* figures 6A, 6B, 10B, 11A * | 1-12 | |
| A | WO 2021/206371 A1 (KT CORP [KR]) 14 October 2021 (2021-10-14)<br>* the whole document * *<br>& US 2023/138737 A1 (HONG SUNG-PYO [KR]) 4 May 2023 (2023-05-04)<br>* abstract *<br>* paragraphs [0127] – [0150], [0175] *<br>* figure 9 * | 1-12 | **TECHNICAL FIELDS SEARCHED (IPC)**<br><br>H04W |
| A | WO 2022/032114 A1 (GOOGLE LLC [US]) 10 February 2022 (2022-02-10)<br>* abstract *<br>* paragraphs [0001], [0040] – [0041] *<br>* figure 1A * | 1-12 | |

The present search report has been drawn up for all claims

| Place of search | Date of completion of the search | Examiner |
|---|---|---|
| Berlin | 30 June 2023 | Bittermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 6689

This annex lists the patent family members relating to the patent documents cited in  the above-mentioned European search report.
The members are as contained in the European Patent Office EDP file on
The European Patent Office is in no way liable for these particulars which are merely given for the purpose of information.

30-06-2023

| Patent document cited in search report | | Publication date | Patent family member(s) | | Publication date |
|---|---|---|---|---|---|
| WO 2021147959 | A1 | 29-07-2021 | CN | 115004780 A | 02-09-2022 |
| | | | EP | 4091364 A1 | 23-11-2022 |
| | | | JP | 2023510425 A | 13-03-2023 |
| | | | KR | 20220126759 A | 16-09-2022 |
| | | | US | 2023066448 A1 | 02-03-2023 |
| | | | WO | 2021147959 A1 | 29-07-2021 |
| WO 2021158060 | A1 | 12-08-2021 | US | 2023107246 A1 | 06-04-2023 |
| | | | WO | 2021158060 A1 | 12-08-2021 |
| WO 2021206371 | A1 | 14-10-2021 | EP | 4192125 A1 | 07-06-2023 |
| | | | US | 2023138737 A1 | 04-05-2023 |
| | | | WO | 2021206371 A1 | 14-10-2021 |
| WO 2022032114 | A1 | 10-02-2022 | EP | 4193674 A1 | 14-06-2023 |
| | | | WO | 2022032114 A1 | 10-02-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220021588